# EUROPEAN PATENT APPLICATION

(11) **EP 4 618 604 A1**
(43) Date of publication of application: **17.09.2025**
(21) Application number: 23916469.2
(22) Date of filing: 16.11.2023
(51) Int. Cl.: H04W 12/037, H04W 12/04, H04W 12/10, H04W 28/06, H04W 36/00, H04W 36/38, H04W 72/231

(54) **METHOD AND DEVICE FOR APPLYING SECURITY TECHNIQUE TO MOBILITY MAC CE BASED ON L1/L2 IN MOBILE COMMUNICATION SYSTEM**

(30) Priority: 11.01.2023 KR 20230003973
(71) Applicant: Samsung Electronics Co., Ltd., Suwon-si, Gyeonggi-do 16677 (KR)
(72) Inventor: JIN, Seungri, Suwon-si, Gyeonggi-do 16677 (KR); KIM, Donggun, Suwon-si, Gyeonggi-do 16677 (KR); AGIWAL, Anil, Suwon-si, Gyeonggi-do 16677 (KR)
(74) Representative: Nederlandsch Octrooibureau
(86) International application number: PCT/KR2023/095080
(87) International publication number: WO 2024/150986

(57) **Abstract**

The present disclosure relates to a 5G or 6G communication system for supporting a higher data transmission rate.

## Description

### [Technical Field]

The disclosure relates to a mobile communication system (or a wireless communication system). More specifically, the disclosure relates to a method and device for enhancing security when a terminal and a base station perform data communication.

### [Background Art]

5^{th} generation (5G) mobile communication technologies define broad frequency bands such that high transmission rates and new services are possible, and can be implemented not only in "Sub 6 GHz" bands such as 3.5 GHz, but also in "Above 6 GHz" bands referred to as mmWave including 28 GHz and 39 GHz. In addition, it has been considered to implement 6^{th} generation (6G) mobile communication technologies (referred to as Beyond 5G systems) in terahertz bands (e.g., 95 GHz to 3 THz bands) in order to accomplish transmission rates fifty times faster than 5G mobile communication technologies and ultra-low latencies one-tenth of 5G mobile communication technologies.

At the beginning of the 5G mobile communication technologies, in order to support services and to satisfy performance requirements in connection with enhanced mobile broadband (eMBB), ultra-reliable low latency communications (URLLC), and massive machine-type communications (mMTC), there has been ongoing standardization regarding beamforming and massive multi-input multi-output (MIMO) for mitigating radio-wave path loss and increasing radio-wave transmission distances in mm Wave, supporting numerologies (e.g., operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding locations and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and locationing.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures. i.e., 1b-step random access channel (RACH) for NR. There also has been ongoing standardization **in** system architecture/service regarding a 5G baseline architecture (e.g., service based architecture or service based interface) for combining network functions virtualization (NFV) and software-defined networking (SDN) technologies, and mobile edge computing (MEC) for receiving services based on UE locations.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

When a terminal is currently serviced from a serving cell through a specific beam in a communication system, it can measure and report beams belonging to other cells. At this time, if the beam of a neighbor cell is better than the current serving cell, the terminal can receive indication of a cell change to the neighbor cell through L1/L2 signaling and perform the cell change.

Meanwhile, when L1/L2 signaling indicating handover, especially MAC CE, is used, security technology for the signaling is not applied. Therefore, the terminal may be hacked or malfunction.

Accordingly, the disclosure proposes a scheme for enhancing the security of the terminal. Specifically, in the case where the terminal is indicated to perform handover through MAC CE, a method and device for enhancing security are proposed.

The technical problems to be solved in embodiments of the disclosure are not limited to those mentioned above, and other technical problems not mentioned can be clearly understood from the description below by a person skilled in the technical field to which the disclosure belongs.

### [Solution to Problem]

To solve the above problems, the disclosure provides a method performed by a transmitting device in a wireless communication system. The method includes generating a media access control (MAC) sub protocol data unit (PDU) to which integrity protection is applied; generating a first field related to at least one MAC sub PDU to which the integrity protection is applied; generating a MAC PDU including the at least one MAC sub PDU and the first field; and transmitting the MAC PDU to a receiving device.

To solve the above problems, the disclosure provides a method performed by a receiving device in a wireless communication system. The method includes receiving, from a transmitting device, a media access control (MAC) protocol data unit (PDU) including at least one MAC sub PDU to which integrity protection is applied and a first field related to the at least one MAC sub PDU to which the integrity protection is applied; and performing integrity verification of the at least one MAC sub PDU, based on the first field.

To solve the above problems, the disclosure provides a transmitting device in a wireless communication system. The transmitting device includes a transceiver configured to transmit and receive a signal; and a controller configured to generate a media access control (MAC) sub protocol data unit (PDU) to which integrity protection is applied, generate a first field related to at least one MAC sub PDU to which the integrity protection is applied, generate a MAC PDU including the at least one MAC sub PDU and the first field, and transmit the MAC PDU to a receiving device.

To solve the above problems, the disclosure provides a receiving device in a wireless communication system. The receiving device includes a transceiver configured to transmit and receive a signal; and a controller configured to receive, from a transmitting device, a media access control (MAC) protocol data unit (PDU) including at least one MAC sub PDU to which integrity protection is applied and a first field related to the at least one MAC sub PDU to which the integrity protection is applied, and perform integrity verification of the at least one MAC sub PDU, based on the first field.

### [Advantageous Effects of Invention]

According to various embodiments proposed in the disclosure, security can be enhanced in a protocol layer device of a communication system. More specifically, security can be enhanced in a protocol layer device so as to prevent errors, data loss, performance degradation, or service quality degradation of the protocol layer device that may occur due to security threats or attacks.

The effects obtainable from the disclosure are not limited to those mentioned above, and other effects not mentioned can be clearly understood from the description below by a person skilled in the art to which the disclosure belongs.

### [Brief Description of Drawings]

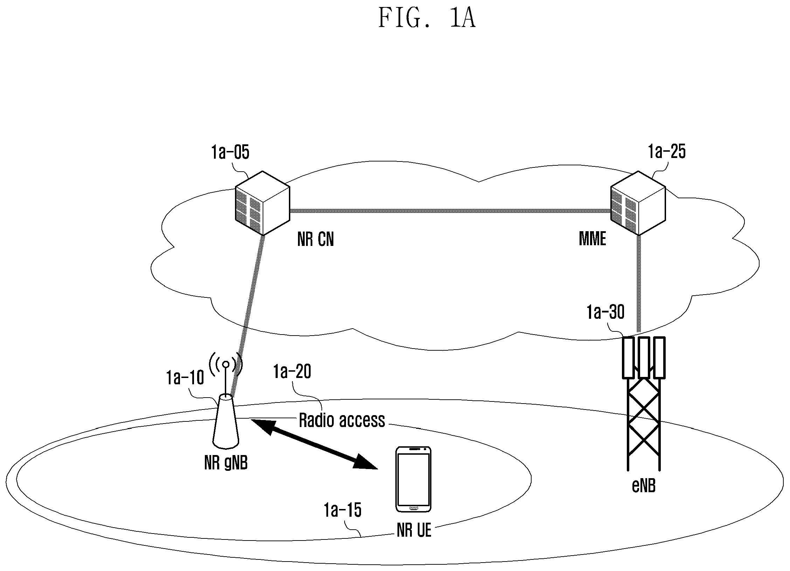

FIG. 1A is a diagram illustrating a structure of a next-generation mobile communication system according to an embodiment of the disclosure.

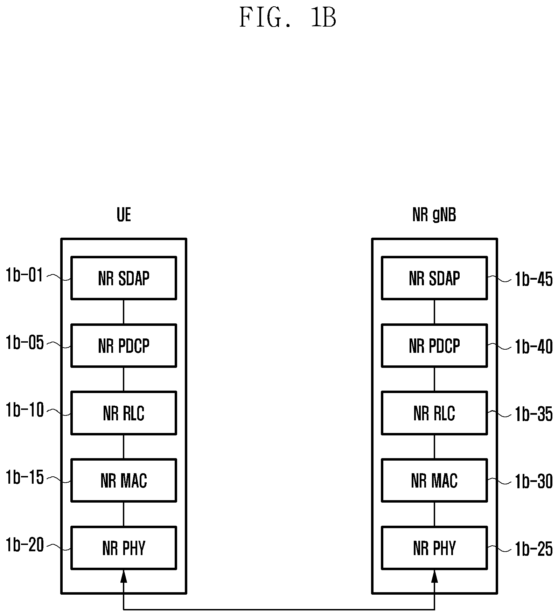

FIG. 1B is a diagram illustrating a radio protocol structure of a next-generation mobile communication system according to an embodiment of the disclosure.

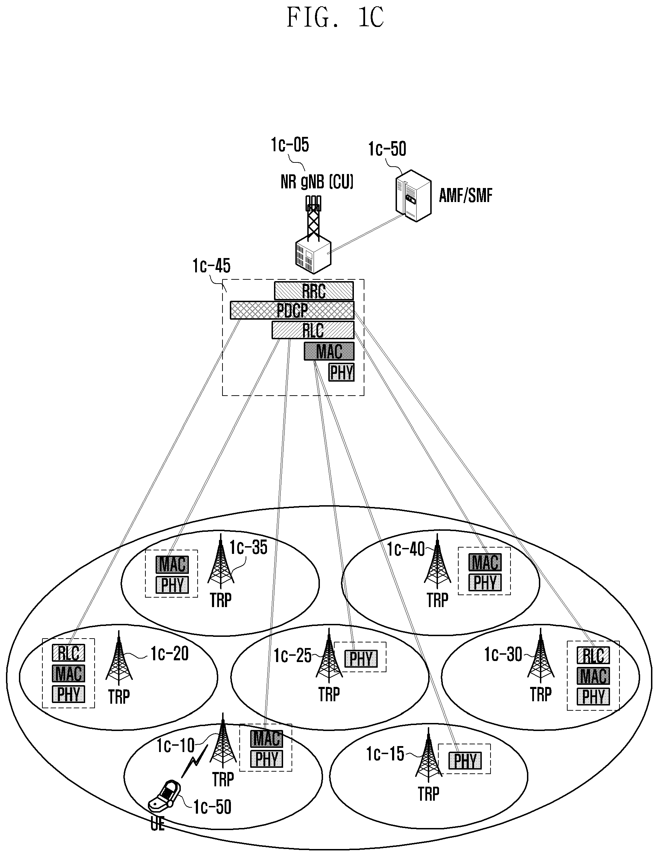

FIG. 1C is a diagram illustrating a structure of another next-generation mobile communication system according to an embodiment of the disclosure.

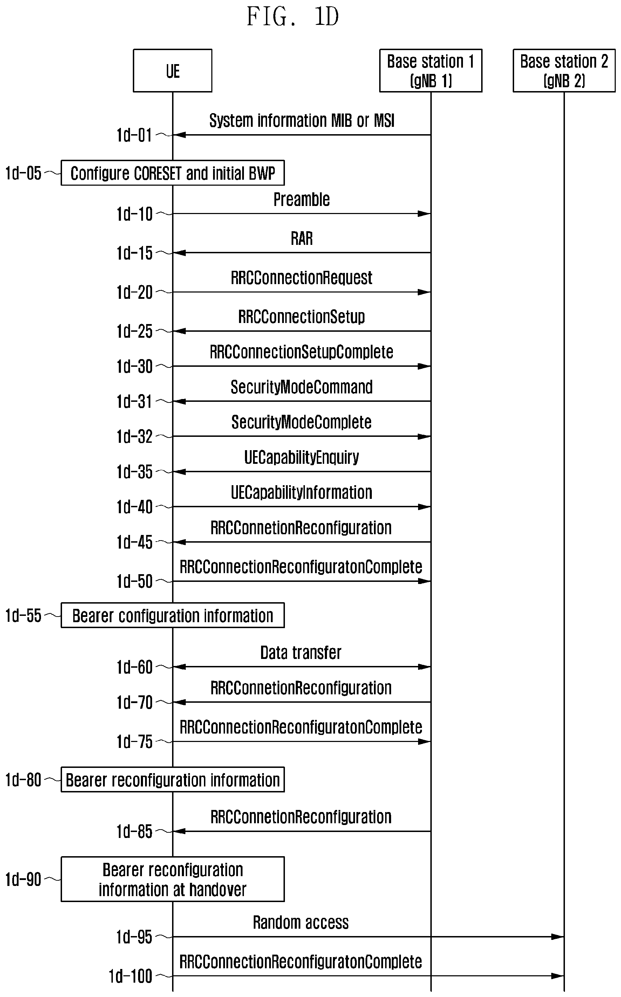

FIG. 1D is a diagram illustrating a process for a UE to switch from an RRC idle mode to an RRC connected mode according to an embodiment of the disclosure.

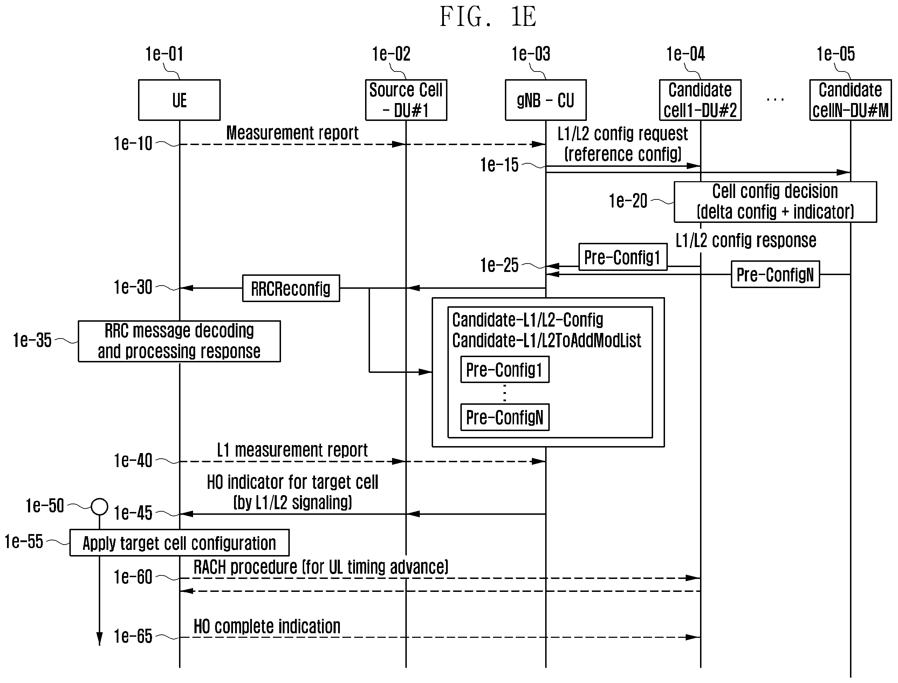

FIG. 1E is a diagram illustrating a process of delivering configuration information about neighbor cells for L1/L2-based handover to the neighbor cells according to an embodiment of the disclosure.

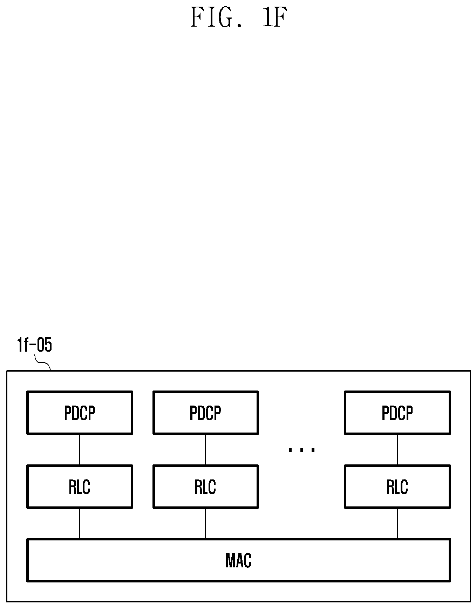

FIG. 1F is a diagram illustrating a structure of a protocol layer device according to an embodiment of the disclosure.

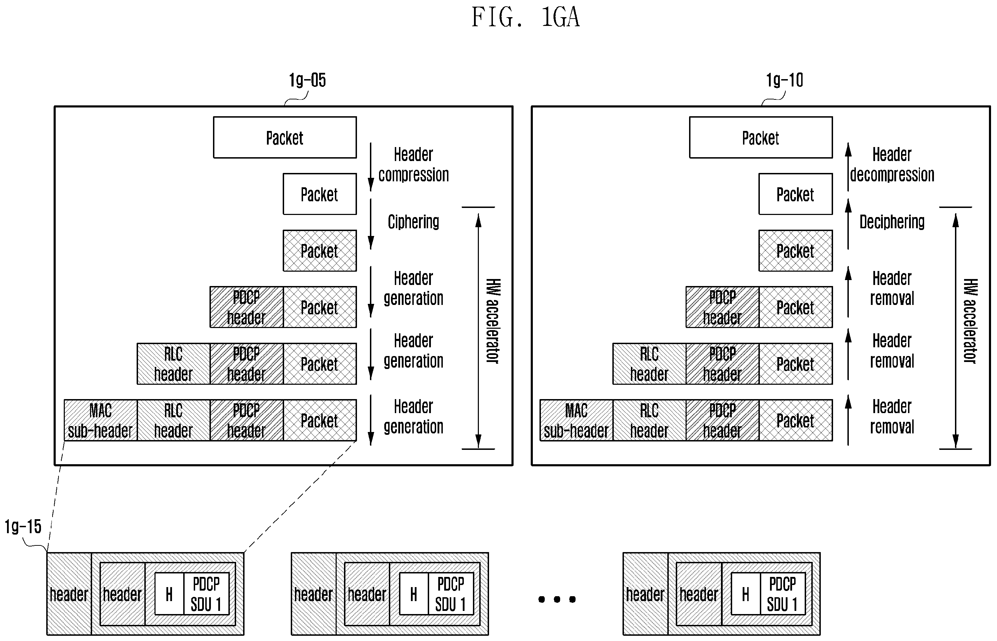

FIG. 1GA is a diagram illustrating a process of processing data according to an embodiment of the disclosure.

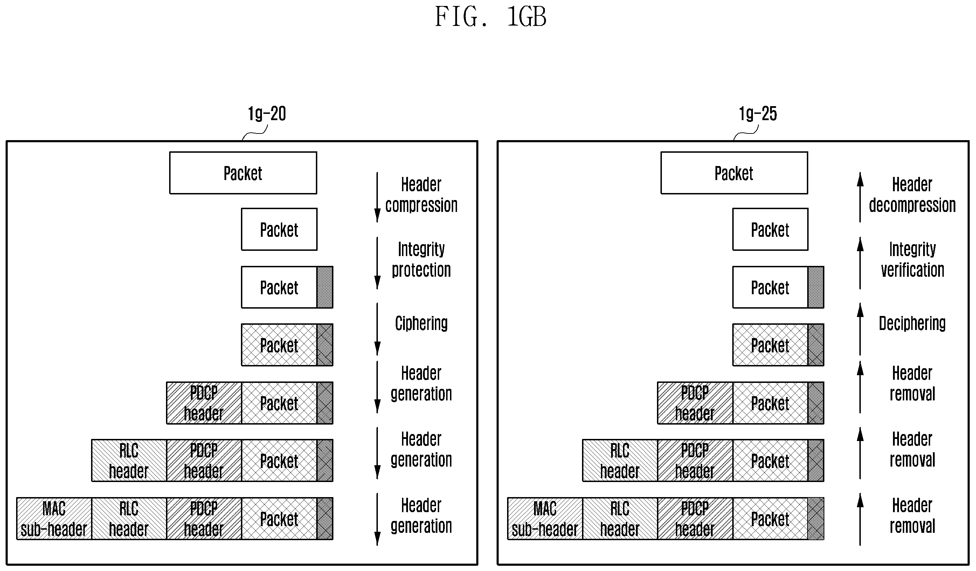

FIG. 1GB is a diagram illustrating a process of processing data according to an embodiment of the disclosure.

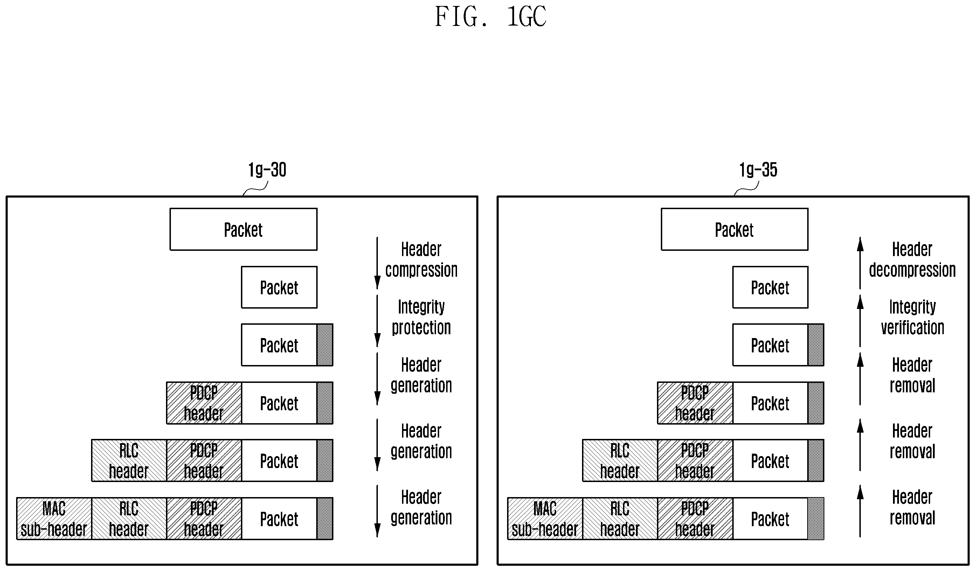

FIG. 1GC is a diagram illustrating a process of processing data according to an embodiment of the disclosure.

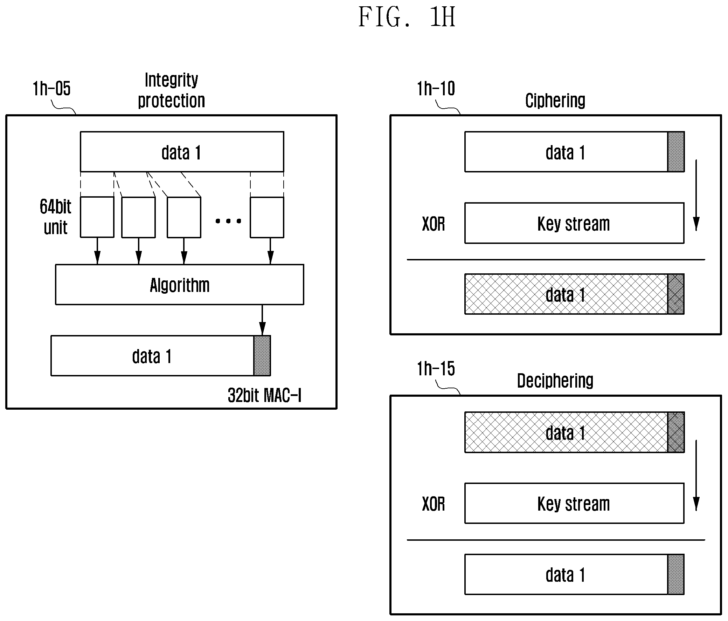

FIG. 1H is a diagram illustrating an integrity protection, integrity verification, ciphering, or deciphering procedure according to an embodiment of the disclosure.

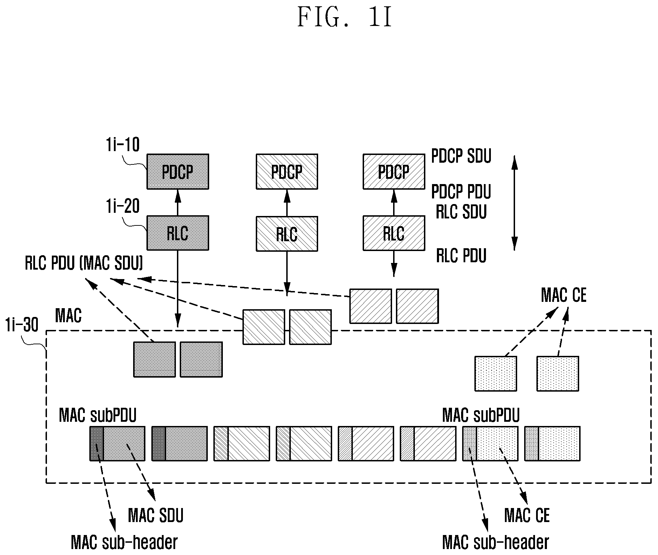

FIG. 1I is a diagram illustrating a process of processing data at a protocol layer of a UE or a base station according to an embodiment of the disclosure.

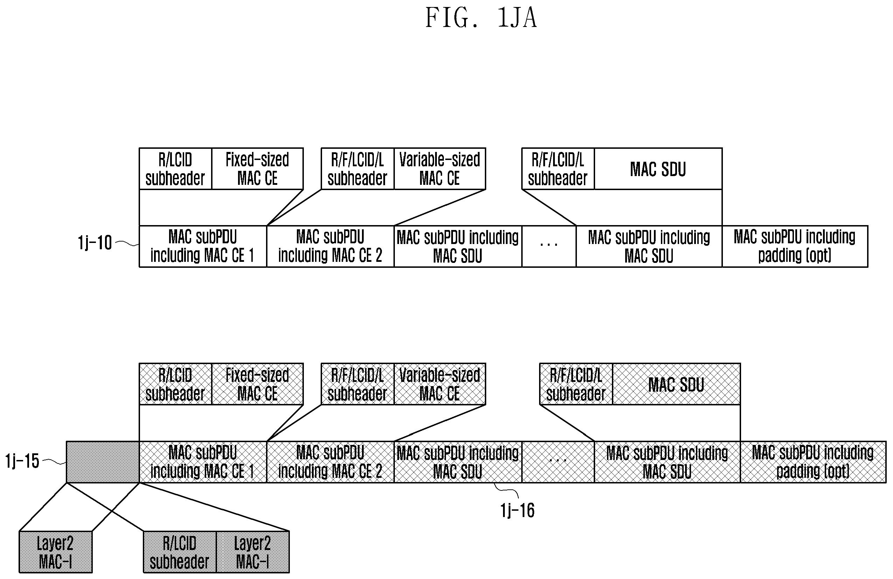

FIG. 1JA is a diagram illustrating a data protection method in relation to downlink data including L1/L2 triggered mobility (LTM) media access control (MAC) control element (CE) according to an embodiment of the disclosure.

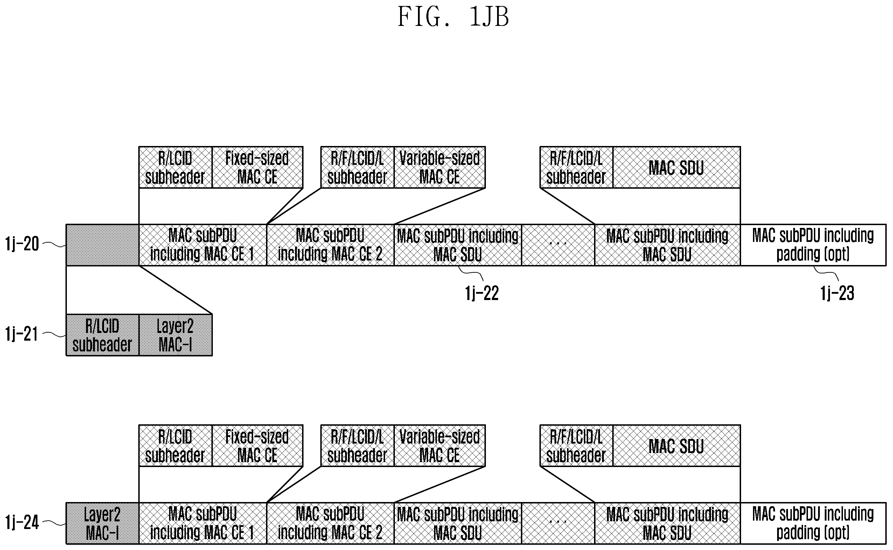

FIG. 1JB is a diagram illustrating a data protection method in relation to downlink data including LTM MAC CE according to an embodiment of the disclosure.

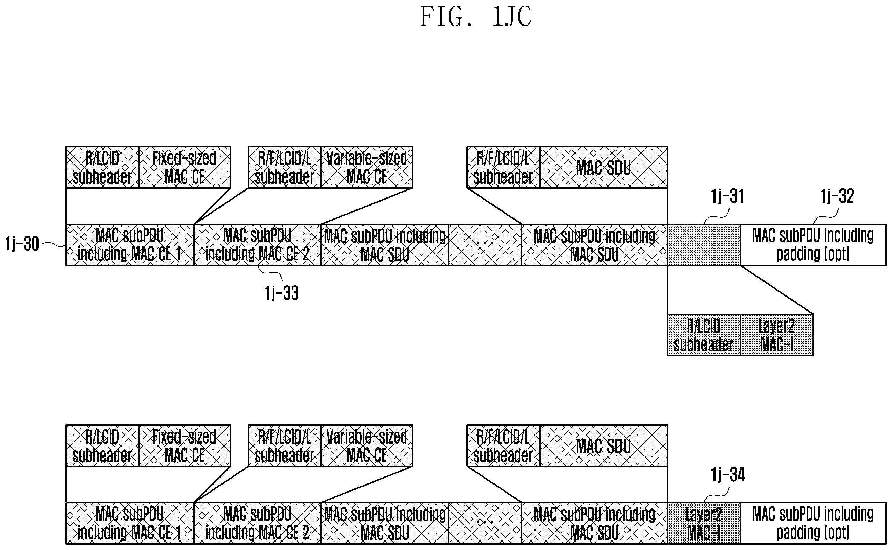

FIG. 1JC is a diagram illustrating a data protection method in relation to downlink data including LTM MAC CE according to an embodiment of the disclosure.

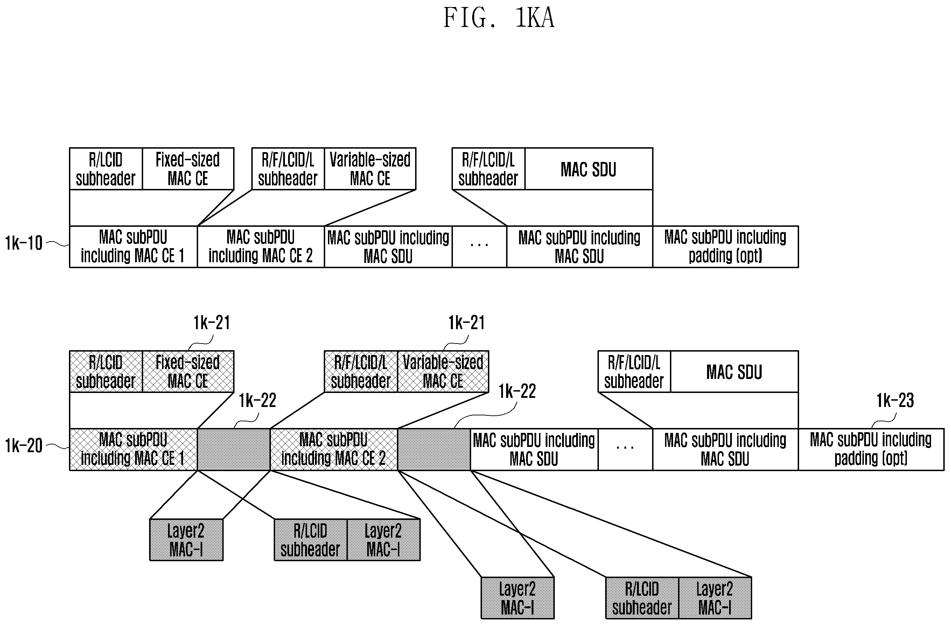

FIG. 1KA is a diagram illustrating a data protection method in relation to downlink data including LTM MAC CE according to another embodiment of the disclosure.

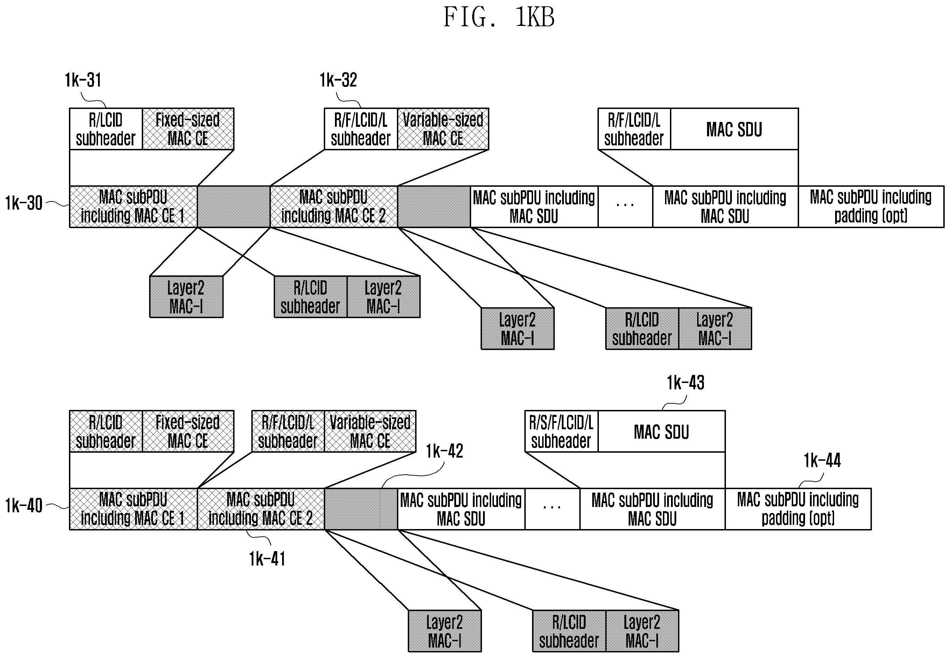

FIG. 1KB is a diagram illustrating a data protection method in relation to downlink data including LTM MAC CE according to another embodiment of the disclosure.

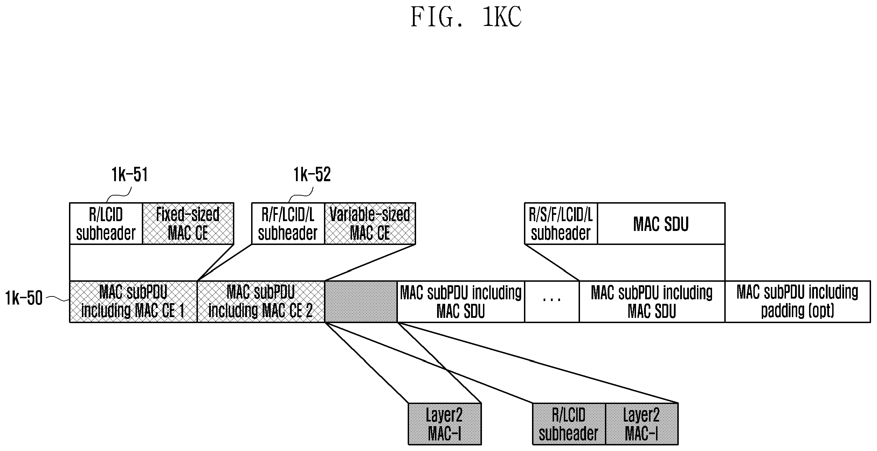

FIG. 1KC is a diagram illustrating a data protection method in relation to downlink data including LTM MAC CE according to another embodiment of the disclosure.

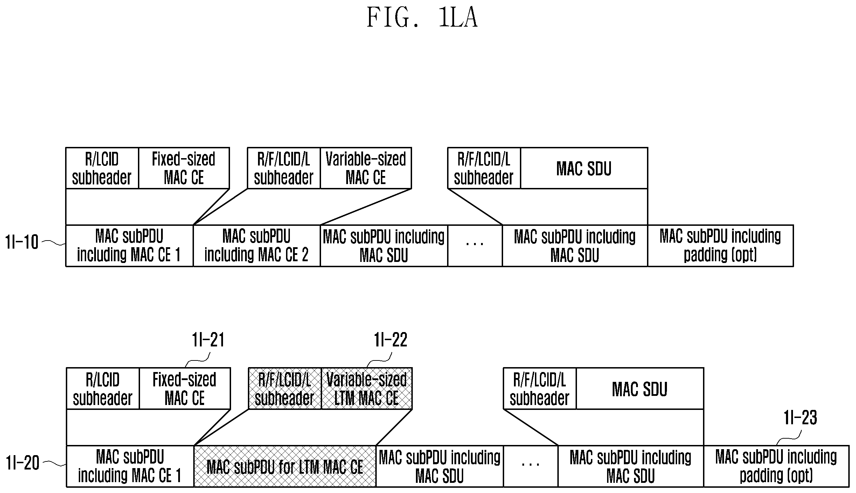

FIG. 1LA is a diagram illustrating a data protection method in relation to downlink data including LTM MAC CE according to yet another embodiment of the disclosure.

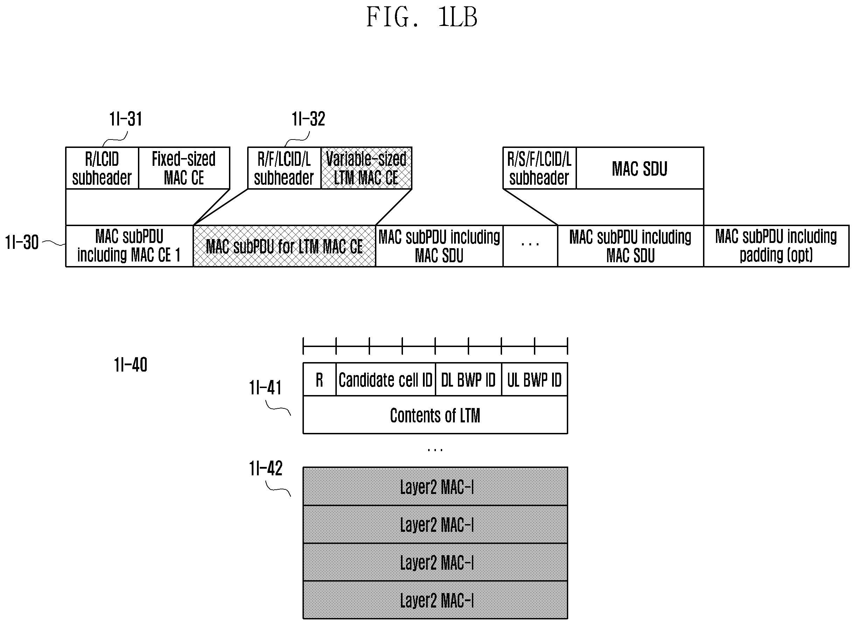

FIG. 1LB is a diagram illustrating a data protection method in relation to downlink data including LTM MAC CE according to yet another embodiment of the disclosure.

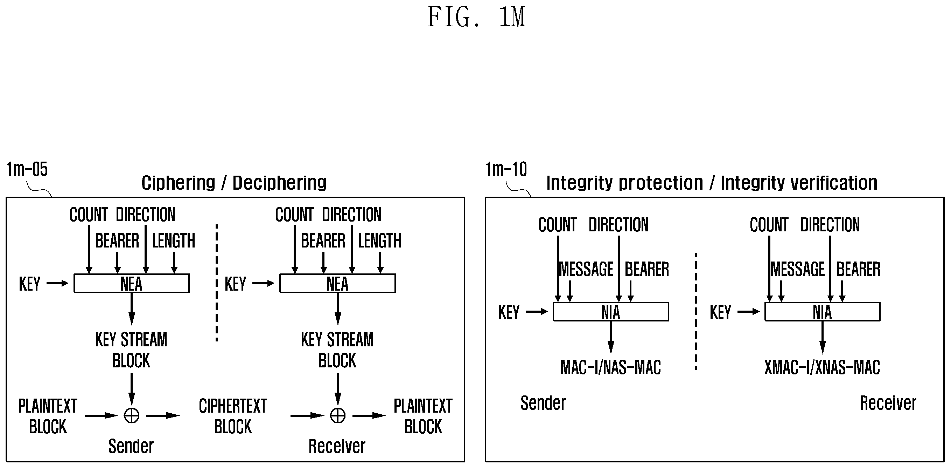

FIG. 1M is a diagram illustrating input values required for a security algorithm when applying a data protection method according to an embodiment of the disclosure.

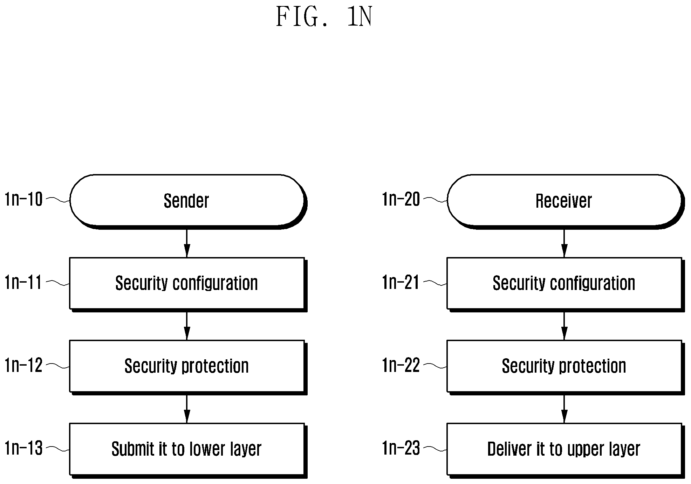

FIG. 1N is a diagram illustrating operations of a sender or a receiver according to an embodiment of the disclosure.

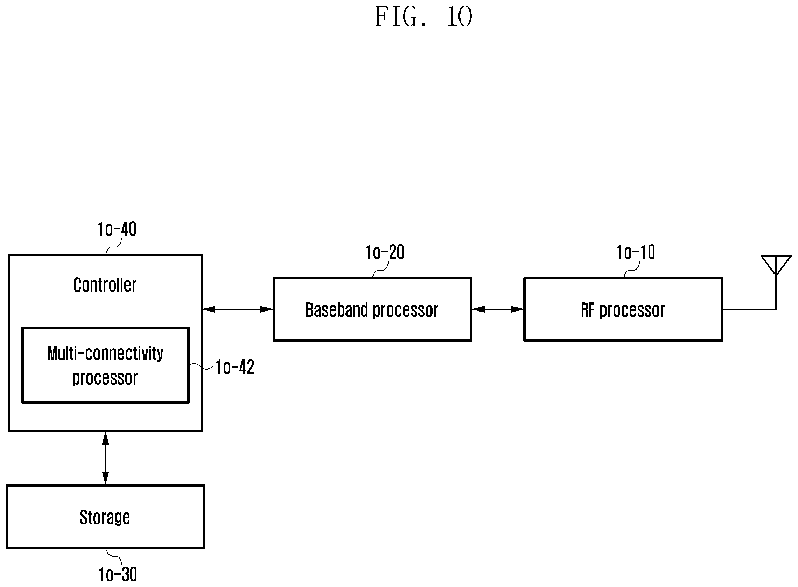

FIG. 1O is a diagram illustrating a structure of a UE according to an embodiment of the disclosure.

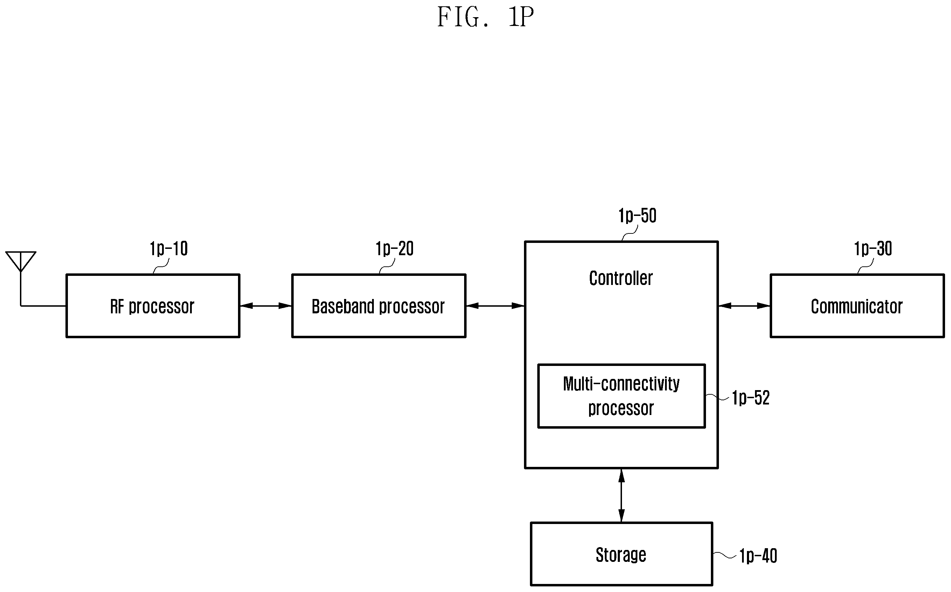

FIG. 1P is a diagram illustrating a block configuration of a transmission and reception point (TRP) in a wireless communication system according to an embodiment of the disclosure.

### [Mode for the Invention]

In describing embodiments herein, descriptions of technical contents that are well known in the technical field to which the disclosure belongs and are not directly related to the disclosure are omitted. This is to convey the subject matter of the disclosure more clearly without obscuring it by omitting any unnecessary description.

For the same reason, some elements in the drawings are exaggerated, omitted, or schematically illustrated. Also, the size of each element does not entirely reflect the actual size. In the drawings, the same or corresponding elements are denoted by the same reference numerals.

The advantages and features of the disclosure and the manner of achieving them will become apparent with reference to embodiments described in detail below and with reference to the accompanying drawings. The disclosure may, however, be embodied in many different forms and should not be construed as being limited to the embodiments set forth herein. Rather, these embodiments are provided so that the disclosure will be thorough and complete and will fully convey the scope of the disclosure to those skilled in the art. The disclosure is only defined by the scope of claims. In the disclosure, the same reference numerals are used to indicate the same elements.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term 'unit' used in embodiments refers to a software or hardware component such as a field programmable gate array (FPGA) or application specific integrated circuit (ASIC), and the 'unit' performs certain tasks. However, the 'unit' is not limited to software or hardware. The 'unit' may be constituted to reside on an addressable storage medium and constituted to execute on one or more processors. Thus, the 'unit' may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and 'units' may be combined into fewer components and 'units' or further separated into additional components and 'units'. In addition, the components and 'units' may be implemented to operate one or more central processing units (CPUs) in a device or a secure multimedia card.

Hereinafter, the operation principle of the disclosure will be described in detail in conjunction with the accompanying drawings. In the following description of the disclosure, a detailed description of known functions or configurations incorporated herein will be omitted when it may make the subject matter of the disclosure unnecessarily unclear. The terms which will be described below are terms defined in consideration of the functions in the disclosure, and may vary depending on the user or operator's intention or custom. Therefore, the definitions of the terms should be made based on the contents throughout the description. Hereinafter, an embodiment of the disclosure will be described with reference to the accompanying drawings.

In the following description, terms for identifying access nodes, terms referring to network entities, terms referring to messages, terms referring to interfaces between network entities, terms referring to various kinds of identification information, etc. are illustratively used for the convenience of description. Therefore, the disclosure is not limited by the terms as used below, and other terms referring to subjects having equivalent technical meanings may be used.

For the convenience of explanation below, the disclosure uses terms and names defined in the 3rd generation partnership project (3GPP) long term evolution (LTE) or 3GPP new radio (NR) standards. However, the disclosure is not limited by such terms and names, and may be equally applied to systems that conform to other standards. In the disclosure, an eNB may be used interchangeably with a gNB for the convenience of explanation. That is, a base station described as the eNB may represent the gNB.

In the disclosure, a bearer may refer to including an SRB and a DRB, where the SRB means a signaling radio bearer and the DRB means a data radio bearer. The SRB is mainly used to transmit and receive RRC messages of an RRC layer device, and the DRB is mainly used to transmit and receive user layer data.

The disclosure proposes a method for enhancing security for MAC CE in a next-generation mobile communication system.

In the security enhancement method, a data protection procedure performed by a sender for security enhancement may include a ciphering procedure or an integrity protection procedure, and a data protection release procedure performed by a receiver for security enhancement may include a deciphering procedure or an integrity verification procedure. For example, the data protection procedure may refer to at least one of the ciphering procedure or the integrity protection procedure. Or, the data protection release procedure may refer to at least one of the deciphering procedure or the integrity verification procedure.

According to an embodiment of the disclosure, the target to which the data protection procedure or the data protection release procedure is applied is data, and the data may include at least one or more of a MAC PDU, a MAC SDU, a MAC subPDU, a MAC subheader, padding, a MAC SDU and a MAC subheader, MAC control information (MAC CE, MAC control element) and a MAC subheader, or MAC control information.

A service data unit (SDU) may include data received from an upper layer device by each protocol layer device (e.g., PDCP layer, RLC layer, or MAC layer) or data to be delivered to an upper layer device by a lower layer device.

A protocol data unit (PDU) may include data processed by each protocol layer device and attached with a header of each protocol layer device in front of the SDU. Additionally, in the disclosure, a MAC subPDU may indicate only a MAC subheader (e.g., in the case of indicating padding), indicate a MAC subheader and a MAC SDU, indicate a MAC subheader and MAC control information, or indicate a MAC subheader and padding.

In the next-generation mobile communication system, a UE and a base station may perform a security configuration procedure in a process of establishing an RRC connection. The security configuration procedure may include at least one of a procedure for agreeing on security configuration information between the UE and the base station or a procedure for configuring or activating a security procedure.

For example, in the security configuration procedure, the procedure for agreeing on security configuration information may include a procedure for agreeing on security configuration information such as a security key or a security algorithm (e.g., a ciphering algorithm, a deciphering algorithm, an integrity protection algorithm, or an integrity verification algorithm) that the UE and the base station should apply to perform a data protection procedure or a data protection release procedure. In addition, the procedure for configuring or activating a security procedure between the UE and the base station may include a procedure for configuring or activating a data protection procedure or a data protection release procedure. The procedure for agreeing on security configuration information or the procedure for configuring or activating a security procedure may be performed by transmitting and receiving a SecurityModeCommand message or a SecurityModeComplete message between the UE and the base station, and may also be performed as an authentication and key agreement (AKA) procedure.

According to an embodiment of the disclosure, in the case where a security procedure is configured and activated, if integrity protection is configured when the UE transmits data on a bearer (SRB or DRB), the PDCP layer device may perform the integrity protection procedure (e.g., applying an integrity protection algorithm) on data (PDCP SDU) received from an upper layer device, along with its headers. For example, the integrity protection procedure may be performed on a PDCP header, an SDAP header, a header (or data) in the PDCP layer device, headers generated with a compression function configured (which may include, for example, an uplink data compression (UDC) header or an Ethernet header compression (EHC) header), or a header or data compressed according to the configured compression function. For example, the integrity protection algorithm may be applied to the headers or data, and the generated message authentication code - integrity (MAC-I) field may be attached to the end of the data to complete the integrity protection procedure.

According to an embodiment of the disclosure, if integrity protection is configured for data received from an upper layer device and a ciphering procedure is configured, the ciphering procedure may be performed on data to which integrity protection is applied. The ciphering procedure may be applied to the remaining part except for the PDCP header or the SDAP header. For example, the ciphering procedure may be applied to the PDCP SDU, or the UDC header or the EHC header if a header compression procedure or a data compression procedure is configured, or the compressed header, or the compressed data, or the data to which integrity protection is applied, or the MAC-I field.

According to an embodiment of the disclosure, if the header compression procedure or the data compression procedure is configured in the PDCP layer device, the header compression procedure or the data compression procedure may be performed before the integrity protection procedure or the ciphering procedure. The header compression procedure may include a robust header compression (ROHC) or Ethenet header compression (EHC) function, and the data compression procedure may include uplink data compression (UDC).

As described above, the PDCP layer device may complete data processing according to the configured function, generate a PDCP PDU based on a PDCP header and data, and deliver the generated PDCP PDU to a lower layer device. If necessary, the PDCP layer device may generate PDCP control data, and configure not to apply the data protection procedure to the PDCP control data.

For example, a case where it is necessary to generate the PDCP control data may include a case where a condition for generating the PDCP control data (PDCP control PDU) is satisfied. The PDCP control data may include PDCP status report (including information indicating successful data reception corresponding to each PDCP serial number as ACK or NACK with a 1-bit indicator), feedback information for a header compression protocol, feedback information for a data compression protocol, or information for configuring a header compression protocol. The data protection procedure may include at least one of the integrity protection procedure or the ciphering procedure.

Because it is assumed that security threats can be resolved by implementation of a base station or UE after an RRC connection is established, control data between protocol layer devices may be considered as not subject to protection.

According to an embodiment of the disclosure, the RLC layer device may consider a PDCP PDU as an RLC SDU, and data processing may be performed in the RLC layer device. Data segmentation may also be performed as needed (for example, when transmission resources are insufficient). In the above, the RLC layer device may construct an RLC header to generate an RLC PDU and deliver it to the MAC layer device.

The RLC layer device may generate RLC control data as needed, and deliver the RLC control data to a lower layer as the RLC PDU. The needed case may include a case where a condition for generating the RLC control data (RLC control PDU) is satisfied. The RLC control data may generate an RLC status report, and the RLC status report may include information indicating successful data reception corresponding to each RLC sequence number as ACK or NACK.

Meanwhile, since the data protection procedure is performed only in the PDCP layer device, the data protection procedure may not be applied to the RLC control data generated in the RLC layer device.

According to an embodiment of the disclosure, the MAC layer device may consider the RLC PDU as a MAC SDU, and the MAC layer device may receive the RLC PDUs from different RLC layer devices connected to the MAC layer device. In the above, the MAC layer device may generate a MAC subheader based on different MAC SDUs and concatenate it to generate respective MAC subPDUs. If necessary (for example, according to a condition of generating MAC control information), the MAC layer device may construct MAC control information, generate a MAC subheader, and concatenate it to generate a MAC subPDU. The MAC subPDU may be composed of a MAC subheader for padding, or padding and a MAC subheader.

When the MAC layer device constructs a MAC PDU (a data unit composed of a plurality of MAC subPDUs), if padding is required when constructing downlink data based on the generated MAC subPDU (for example, when the base station transmits data to the UE), it may be positioned at the very end of the MAC PDU composed of MAC subPDUs, and if MAC control information or several pieces of MAC control information is included, it may be positioned at the very front of the MAC PDU, and MAC SDUs may be positioned after the MAC control information.

In addition, in the MAC subPDU, the MAC subheader may always be positioned before the MAC SDU or MAC control information or padding, and as described above, the MAC PDU may be composed of the MAC subPDUs and delivered to a lower layer device for transmission. As described above, in the case of downlink data, there is an advantage in that important control information, such as MAC control information, may be positioned at the very front so that the UE can quickly process the control information first.

Meanwhile, since the data protection procedure is performed only in the PDCP layer device, the data protection procedure may not be applied to the MAC control data generated in the MAC layer device.

On the other hand, if padding is required when constructing uplink data based on the generated MAC subPDUs in the MAC layer device (for example, when the UE transmits data to the base station), it may be positioned at the very end of the MAC PDU composed of MAC subPDUs, and if MAC control information or several pieces of MAC control information is included, it may be positioned at the very end of the MAC PDU or, if there is padding, it may be positioned before the padding, and the MAC SDUs may be positioned before the MAC control information.

In addition, in the MAC subPDU composed of the MAC subheader and the MAC SDU or MAC control information or padding, the MAC subheader may always be positioned before the MAC SDU or MAC control information or padding, and the MAC PDU may be composed of the MAC subPDUs as described above and delivered to a lower layer device for transmission. In the case of uplink data as described above, the MAC control information may be located at the very end so that the UE can pre-generate MAC SDUs to process them quickly, process dynamically generated MAC control information in parallel, complete the generation of MAC control information, and then attach the MAC control information to the back of the pre-processed MAC SDUs, thereby facilitating the implementation of the UE, and increasing the data processing speed due to the parallel processing.

Meanwhile, since the data protection procedure is performed only in the PDCP layer device, the data protection procedure may not be applied to the MAC control data generated in the MAC layer device.

At the receiver, when the MAC layer device receives the MAC PDU from a lower layer device, it may process data in units of MAC subPDU.

If the MAC subPDU includes MAC control information, the MAC layer device can read and remove the MAC subheader. The MAC layer device can identify the type of MAC control information based on a logical channel identifier of the MAC subheader, interpret the indication of the MAC control information, and perform the corresponding procedures.

If the MAC subPDU includes a MAC SDU, the device can read and remove the MAC subheader. The MAC layer device can deliver the MAC SDU as an RLC PDU to an upper layer device (RLC layer device) corresponding to the logical channel identifier contained in the MAC subheader. In addition, if the MAC subPDU indicates padding or includes padding, the MAC subPDU corresponding to the padding can be discarded.

The RLC layer device that receives the RLC PDU from the MAC layer device above can read or remove an RLC header. The RLC layer device can deliver the RLC SDU as a PDCP PDU to an upper layer device (e.g., the PDCP layer device).

If the RLC PDU received above includes an RLC SDU segment, the RLC layer device can reassemble the received RLC PDUs based on the RLC serial number of the RLC header or segmentation information (SI field) or segmentation offset information (SO field) to form a complete RLC SDU and then deliver it to an upper layer device as a PDCP PDU.

If the received RLC PDU is RLC control data (RLC control PDU), the RLC layer device can read and interpret the RLC control data (e.g., RLC status report) to identify successfully delivered data and unsuccessfully delivered data with ACK or NACK information. If necessary, a retransmission procedure can be performed on data that was not successfully delivered. In addition, the RLC layer device can discard duplicated data or data outside the RLC reception window based on the RLC sequence number of the RLC header.

The PDCP layer device that receives the PDCP PDU from the RLC layer device can read the PDCP header and derive a COUNT value based on the PDCP sequence number information of the PDCP header. In addition, the PDCP layer device can discard duplicated data or data outside the PDCP reception window based on the COUNT value.

In addition, the PDCP layer device can identify the indicator of the PDCP header received above, and if the PDCP PDU is a PDCP data PDU and the data protection procedure is configured, the PDCP layer device can perform a data release procedure. For example, if the ciphering procedure or the deciphering procedure is configured in the PDCP layer device, the PDCP layer device can perform the deciphering procedure for the PDCP SDU, excluding the PDCP header of the PDCP PDU, based on the configured security key or security algorithm or the COUNT value.

In addition, for example, if the integrity protection procedure or the integrity verification procedure is configured in the PDCP layer device, the PDCP layer device can perform the integrity verification procedure on the PDCP PDU or the deciphered PDCP SDU and the PDCP header based on the configured security key or security algorithm or the COUNT value. If the data protection release procedure is successfully performed as described above, the PDCP layer device can perform a header decompression procedure or a data decompression procedure on the PDCP SDU if a header compression function or a data compression function is configured for the PDCP SDU, and deliver it to an upper layer device in ascending order of the COUNT value.

If the PDCP layer device identifies the indicator of the PDCP header received above, and if the PDCP PDU is a PDCP control PDU, the PDCP layer device can read directly the PDCP control data (PDCP control PDU) without applying the data protection release procedure (e.g., the deciphering procedure or the integrity verification procedure) to the PDCP control PDU.

When the UE establishes an RRC connection and is connected to a network to transmit and receive data, the data may be processed through a PHY layer device, a MAC layer device, a RLC layer device, or a PDCP layer device. The data protection procedure (ciphering or integrity protection procedure) or the data protection release procedure (deciphering or integrity verification procedure) may be performed in the PDCP layer device. Therefore, the data protection procedure or the data protection release procedure may not be applied to an RLC header, RLC control data (RLC control PDU), MAC subheader, or MAC control information (MAC CE, MAC control element) generated in a lower layer device than the PDCP layer device. The data protection procedure or the data protection release procedure may also not be applied to PDCP control data.

In the next-generation mobile communication system, even if the UE establishes the RRC connection with the network, configures security configuration information, and performs the data protection procedure or the data protection release procedure in the PDCP layer device or an upper layer device, a security risk may still remain. This is because the data protection procedure or the data protection release procedure may not be applied to PDCP control data, an RLC header, an RLC control data (RLC control PDU), an MAC subheader, or an MAC control information (MAC CE, MAC control element). Specifically, a malicious arbitrary base station (or user) may perform an attack that causes a protocol malfunction, error, or performance degradation by constructing incorrect PDCP control data, RLC header, RLC control data (RLC control PDU), MAC subheader, or MAC control information (MAC CE, MAC control element) and transmitting it to a normal UE. Or, by deactivating some cells with MAC control information, data transmission and reception may be stopped for the UE using multiple cells, or by requesting a buffer status report that requests an unnecessary amount of uplink transmission resources from the base station, transmission resources may be wasted. Or, by changing important beam-related information in a high frequency band with MAC control information, the data transmission rate may be reduced, or by arbitrarily constructing and transmitting RLC control data or PDCP control data, an attack may be performed to request unnecessary retransmissions or discard data that has not been successfully transmitted.

According to an embodiment of the disclosure, in order to prevent security threats that can attack the next-generation mobile communication system as described above, a method and device for configuring and performing a data protection procedure or a data protection release procedure in a specific layer device (MAC layer device) are proposed. In addition, a specific structure of data is proposed when the data protection procedure is applied.

According to an embodiment of the disclosure, a structure of data that can be used when configuring a data protection procedure or a data protection release procedure in a MAC layer device and performing the data protection procedure or the data protection release procedure in the MAC layer device is proposed. According to the data structure, the implementation is easy and the efficiency can be improved.

In particular, according to an embodiment of the disclosure, a method for performing a data protection procedure or a data protection release procedure for a MAC CE in a layer 1/layer 2-based mobility support (L1/L2 triggered mobility, LTM) situation is proposed, and a structure of data that can be used at this time is proposed. Specifically, when a handover is indicated through an LTM MAC CE, a method and device for performing a data protection procedure or a data protection release procedure for the corresponding MAC CE are proposed, and a structure of data that can be used at this time is proposed.

FIG. 1A is a diagram illustrating a structure of a next-generation mobile communication system according to an embodiment of the disclosure.

With reference to FIG. 1A, a radio access network of the next-generation mobile communication system may be composed of a next-generation base station (new radio node B (NR NB) or NR gNB) 1a-10 and a new radio core network (NR CN) (or next-generation core network (NG CN)) 1a-05. A user terminal (new radio user equipment, hereinafter referred to as an NR UE or a terminal) 1a-15 may access an external network through the NR NB 1a-10 and the NR CN 1a-05.

In FIG. 1A, the NR NB 1a-10 may correspond to an evolved Node B (eNB) in the legacy LTE system. The NR NB is connected to the NR UE 1a-15 through a radio channel and may provide better service than the legacy node B. In the next-generation mobile communication system, all user traffic is serviced through a shared channel. Thus, a device for collecting state information on buffer states, available transmit power states, channel states, etc. of UEs and performing scheduling is required, and the NR NB 1a-10 serves as this device. In general, one NR NB may control a plurality of cells.

A bandwidth greater than the existing maximum bandwidth can be applied in order to implement super-high-speed data transmission compared to the legacy LTE, and a beamforming technology can be further applied using orthogonal frequency division multiplexing (OFDM) as a radio access technology.

In addition, an adaptive modulation and coding (AMC) scheme of determining a modulation scheme and a channel coding rate can be applied depending on the channel state of the UE.

The NR CN 1a-05 may perform functions such as mobility support, bearer configuration, and quality of service (QoS) configuration. The NR CN is a device for performing not only a mobility management function for the UE but also various control functions and is connected to a plurality of base stations.

In addition, the next-generation mobile communication system can be linked to the legacy LTE system, and the NR CN can be connected to an MME 1a-25 through a network interface. The MME can be connected to an eNB 1a-30, which is the legacy base station.

FIG. 1B is a diagram illustrating a radio protocol structure of a next-generation mobile communication system according to an embodiment of the disclosure.

With reference to FIG. 1B, in each of the UE and the NR base station, the radio protocol of the next-generation mobile communication system may be composed of NR SDAP 1b-01 or 1b-45, NR PDCP 1b-05 or 1b-40, NR RLC 1b-10 or 1b-35, and NR MAC 1b-15 or 1b-30.

The main functions of the NR SDAP 1b-01 or 1b-45 may include some of the following functions.
- User data transmission function (Transfer of user plane data)
- Function of mapping QoS flow and a data bearer for uplink and downlink (Mapping between a QoS flow and a DRB for both DL and UL)
- Function of marking a QoS flow ID for uplink and downlink (Marking QoS flow ID in both DL and UL packets)
- Function of mapping reflective QoS flow to a data bearer for uplink SDAP PDUs (Reflective QoS flow to DRB mapping for the UL SDAP PDUs)

With respect to the SDAP layer device, the UE may be configured through an RRC message whether or not to use a header of the SDAP layer device or whether or not to use a function of the SDAP layer device, for each PDCP layer device, each bearer, or each logical channel. If the SDAP header is configured, a 1-bit indicator of NAS reflective QoS of the SDAP header and a 1 bit-indicator of AS reflective QoS may indicate that the UE can update or reconfigure mapping information about QoS flow and a data bearer in uplink and downlink. The SDAP header may include QoS flow ID information indicating the QoS. The QoS information may be used as data processing priority, scheduling information, etc. to support a seamless service.

The main functions of the NR PDCP 1b-05 or 1b-40 may include some of the following functions.
● Header compression and decompression function (Header compression and decompression: ROHC only)
**●** User data transmission function (Transfer of user data)
**●** Sequential delivery function (In-sequence delivery of upper layer PDUs)
**●** Non-sequential delivery function (Out-of-sequence delivery of upper layer PDUs)
**●** Reordering function (PDCP PDU reordering for reception)
**●** Duplicate detection function (Duplicate detection of lower layer SDUs)
**●** Retransmission function (Retransmission of PDCP SDUs)
**●** Ciphering and deciphering function (Ciphering and deciphering)
**●** Timer-based SDU removal function (Timer-based SDU discard in uplink)

In the above description, the reordering function of the NR PDCP device refers to a function of sequentially reordering PDCP PDUs received from a lower layer on the basis of a PDCP sequence number (SN). This may include a function of sequentially transferring the reordered data to an upper layer, a function of directly transferring the reordered data without regard to the order, a function of recording lost PDCP PDUs by reordering, a function of reporting the statuses of the lost PDCP PDUs to a transmitting side, or a function of requesting retransmission of the lost PDCP PDUs.
**●** The main functions of the NR RLC 1b-10 or 1b-35 may include some of the following functions.
**●** Data transmission function (Transfer of upper layer PDUs)
**●** Sequential delivery function (In-sequence delivery of upper layer PDUs)
**●** Non-sequential delivery function (Out-of-sequence delivery of upper layer PDUs)
**●** ARQ function (Error correction through ARQ)
**●** Concatenation, segmentation, and reassembly function (Concatenation, segmentation and reassembly of RLC SDUs)
**●** Re-segmentation function (Re-segmentation of RLC data PDUs)
**●** Reordering function (Reordering of RLC data PDUs)
**●** Duplicate detection function (Duplicate detection)
**●** Error detection function (Protocol error detection)
**●** RLC SDU deletion function (RLC SDU discard)
**●** RLC re-establishment function (RLC re-establishment)

In the above description, the sequential delivery function (In-sequence delivery) of the NR RLC device refers to a function of sequentially transferring RLC PDUs received from a lower layer to an upper layer. In the case where one original RLC SDU is divided into a plurality of RLC SDUs and received, the sequential delivery function may include a function of reassembling and transmitting the RLC SDUs. The sequential delivery function may include a function of reordering the received RLC PDUs on the basis of an RLC sequence number (SN) or a PDCP SN, a function of recording lost RLC PDUs by reordering, a function of reporting the statuses of the lost RLC PDUs to a transmitting side, and a function of requesting retransmission of the lost RLC PDUs. In the case that there is a lost RLC SDU, the sequential delivery function may include a function of sequentially transferring only RLC SDUs preceding the lost RLC SDU to the upper layer. If a predetermined timer expires even when there is a lost RLC SDU, the sequential delivery function may include a function of sequentially transferring all RLC SDUs received before the timer starts to the upper layer, or a function of sequentially transferring all RLC SDUs received up to that point in time to the upper layer. In addition, the RLC PDUs may be processed in the order in which they are received (in the order of arrival, regardless of the order of sequence numbers) and delivered to the PDCP device out of order (out-of sequence delivery). In the case of segments, the segments stored in the buffer or to be received later may be received, reassembled into a complete one RLC PDU, processed, and delivered to the PDCP device. The NR RLC layer may not include a concatenation function, and this function may be performed in the NR MAC layer or replaced with a multiplexing function of the NR MAC layer.

In the above description, the non-sequential delivery function (Out-of-sequence delivery) of the NR RLC device refers to a function of transferring RLC SDUs received from a lower layer directly to an upper layer regardless of the order of the RLC SDUs. In the case where one original RLC SDU is divided into a plurality of RLC SDUs and received, the non-sequential delivery function may include a function of reassembling and transmitting the RLC SDUs, and a function of storing RLC SNs or PDCP SNs of the received RLC PDUs, reordering them, and recording lost RLC PDUs.

The NR MAC 1b-15 or 1b-30 may be connected to a plurality of NR RLC layer devices composed in one UE, and main functions of the NR MAC may include some of the following functions.
**●** Mapping function (Mapping between logical channels and transport channels)
**●** Multiplexing and demultiplexing function (Multiplexing/demultiplexing of MAC SDUs)
**●** Scheduling information reporting function (Scheduling information reporting)
**●** HARQ function (Error correction through HARQ)
**●** Logical channel priority control function (Priority handling between logical channels of one UE)
**●** UE priority control function (Priority handling between UEs by means of dynamic scheduling)
**●** MBMS service identification function (MBMS service identification)
**●** Transport format selection function (Transport format selection)
**●** Padding function (Padding)

The NR PHY layer 1b-20 or 1b-25 may perform operations of channel-coding and modulating upper layer data to generate an OFDM symbol and transmitting it through a radio channel or demodulating and channel-decoding an OFDM symbol received through a radio channel and transmitting it to an upper layer.

FIG. 1C is a diagram illustrating a structure of another next-generation mobile communication system according to an embodiment of the disclosure.

With reference to FIG. 1C, a cell served by an NR gNB 1c-05 operating based on a beam may be composed of multiple transmission reception points (TRPs) 1c-10, 1c-15, 1c-20, 1c-25, 1c-30, 1c-35, and 1c-40.

The TRP 1c-10 to 1c-40 represents a block that separates some functions of transmitting and receiving physical signals from the legacy NR base station (eNB), and is composed of multiple antennas. The NR gNB 1c-05 may be expressed as a central unit (CU), and the TRP may be expressed as a distributed unit (DU). The functions of the NR gNB 1c-05 and the TRP may be composed by separating each layer from packet data convergence protocol (PDCP)/radio resource (RLC)/media access control (MAC)/PHY layers as denoted by 1c-45.

That is, the TRPs 1c-15 and 1c-25 may have only the PHY layer and perform the function of the corresponding layer, the TRPs 1c-10, 1c-35 and 1c-40 may have only the PHY layer and the MAC layer and perform the functions of the corresponding layers, and the TRPs 1c-20 and 1c-30 may have only the PHY layer, the MAC layer, and the RLC layer and perform the functions of the corresponding layers. In particular, the TRPs 1c-10 to 1c-40 may use beamforming technology that transmits and receives data by generating narrow beams in various directions using multiple transmit/receive antennas.

A UE 1c-50 can access the NR gNB 1c-05 and an external network through the TRPs 1c-10 to 1c-40. In order to provide services to users, the NR gNB 1c-05 can collect state information, such as buffer states, available transmit power states, and channel statesus of UEs, and perform scheduling, thereby supporting connections between the UEs and a core network (CN), especially, AMF/SMF 1c-50.

The disclosure will be described hereinafter based on a structure of the TRP1c-15 or 1c-25 that has only the PHY layer and can perform the function of that layer, but the scope of the disclosure is not limited thereto.

FIG. 1D is a diagram illustrating a process for a UE to switch from an RRC idle mode to an RRC connected mode according to an embodiment of the disclosure.

Specifically, FIG. 1D shows a procedure for the UE to switch from the RRC idle mode to the RRC connected mode in the next-generation mobile communication system of the disclosure, and is a diagram illustrating a method for configuring protocol layer devices or functions of the UE.

A single cell in which a base station provides a service can serve a very wide frequency band. First, the UE can search the entire frequency band provided by an operator (a public land mobile network (PLMN)) in units of a certain resource block (e.g., in units of 12 resource blocks (RBs)). That is, the UE can start searching for a primary synchronization sequence (PSS)/secondary synchronization sequence (SSS) in the entire system bandwidth in the resource block units.

If the UE that searches for the PSS/SSS in the resource block units detects that signals, the UE can read and interpret (decode) the signals and identify the boundary between a subframe and a radio transmission resource frame (radio frame).

In steps 1d-01 and 1d-05, when the UE completes synchronization, the UE can read system information of a cell on which the UE is currently camping. That is, the UE can identify control resource set (CORESET) information by identifying master system information block (MIB) or minimum system information (MSI) and identify initial bandwidth part (BWP) information by reading the system information.

The CORESET information may include the location of a time/frequency transmission resource where a control signal is transmitted from the base station, and may indicate (or include) the location of a resource where a physical downlink control channel (PDCCH) is transmitted.

When as above the UE completes synchronization of a downlink signal with the base station and can receive a control signal, the UE can perform a random access procedure in the initial BWP in step 1d-10. Specifically, the UE can transmit a random access preamble.

The UE can receive a random access response (RAR) in step 1d-15 and request RRC connection configuration (which may include transmitting RRCConnectionReqeuset) in step 1d-20.

In step 1d-25, the UE can perform RRC connection configuration by receiving an RRC message (which may include receiving RRCConnectionSetup).

When the UE successfully completes the random access procedure to the base station (or cell), in steps 1d-31 and 1d-32, the UE can perform a security connection configuration procedure by transmitting and receiving at least one of a non-access stratum (NAS) message, an access stratum (AS) message, or an RRC message to and from a core network (or the base station) through the base station.

In the above step, the core network or the base station can perform security-related configuration to the UE. More specifically, the core network or the base station can configure, to the UE, at least one of a security key, a security algorithm (e.g., at least one of a ciphering algorithm or an integrity protection algorithm), a security algorithm input parameter, whether or not a ciphering procedure is configured, whether or not an integrity protection procedure is configured, or an update parameter for deriving a security key.

In step 1d-35, when the RRC connection configuration is basically completed, the base station can transmit an RRC message enquiring about UE capability (UECapabilityEnquiry) to the UE in order to identify the UE capability.

Alternatively, the base station may enquire of a mobility management entity (MME) or an access and mobility management function (AMF) about the UE capability in order to identify the UE capability. This is because if the UE has previously connected, the MME or AMF may have stored information on the UE capability.

In step 1d-40, when the UE performs a UE capability report procedure, an RRC message (e.g., a non-access stratum (NAS) message or an access stratum (AS) message) reporting the UE capability may include at least one of the following information.
- Whether or not the integrity protection procedure (or function) is supported for each bearer
- Whether or not the integrity protection procedure is supported for DRB
- Information on functions supported by the UE
- Release information supported by the UE

Specifically, information related to Rel-15, Rel-16, or Rel-17 may be included. For example, the base station or the network may consider that if the UE supports only Rel-15, it supports the integrity protection procedure for DRB with only 64 kbps data rate, or may identify an integrity protection procedure function for DRB through the UE capability report message (e.g., the non-access stratum (NAS) message or the access stratum (AS) message).

In another example, the base station or the network may consider that if the UE supports Rel-15 or Rel-16, it always supports the integrity protection procedure for DRB regardless of the data rate, or may identify an integrity protection procedure function for DRB through the UE capability report message (e.g., the non-access stratum (NAS) message or the access stratum (AS) message).
- Whether or not a data protection procedure or a data protection release procedure is supported for each layer device. For example, it may include at least one of information related to whether a MAC layer device supports a data protection (ciphering or integrity protection) procedure or a data protection release (deciphering or integrity verification) procedure.

The base station or the network that receives the UE capability report message from the UE can configure the data protection procedure or the data protection release procedure to the UE. More specifically, the base station or the network can configure the data protection procedure or the data protection release procedure to the UE for each bearer or for each layer device. At this time, the base station or the network can configure the data protection procedure and the data protection release procedure using an RRC message (e.g., an RRCReconfiguration message, an RRCSetup message, or an RRCResume message).

If the base station does not have desired UE capability information, the base station can request the UE capability from the UE.

The base station can transmit an RRC message to the UE in order to identify the UE capability. For example, through the RRC message, it is possible to identify how much frequency band the UE can read, how the frequency band that the UE can read is supported, or how the UE supports a specific function.

After identifying the UE capability, the base station can configure an appropriate bandwidth part (BWP) or appropriate functions to the UE. When the UE receives the RRC message enquiring about UE capability in step 1d-35, the UE can transmit a response containing UE capability information about functions supported by the UE to the base station in step 1d-40.

In the above, the UE can configure at least one of bearer configuration information, cell group configuration information, cell configuration information, or each layer device information (e.g., at least of an SDAP layer device, a PDCP layer device, an RLC layer device, a MAC layer device, or a PHY layer device) with an RRCSetup message of RRC connection configuration, an RRCResume message (or an RRCConnectionSetup message 1d-25), or an RRCReconfiguration message (or an RRCConnectionReconfiguration message 1d-45 or 1d-70).

The RRC message (at least one of the RRCSetup message, the RRCResume message, or the RRCReconfiguration message) may contain configuration information for a PCell, a PScell, or multiple cells, and can configure a plurality of BWPs for each cell (PCell, PScell, or SCell). The UE that has received the RRCReconfiguration message containing the at least one configuration information can apply the at least one configuration information to a bearer or layer device of the UE. The UE that has applied the at least one configuration information to the bearer or layer device of the UE can construct an RRCReconfigurationComplete message 1d-50 or 1d-75 indicating the completion of reconfiguration and transmit it to the base station.

Additionally, in step 1d-85, the base station or the network can transmit a message containing handover-related information to the UE. Specifically, when indicating the UE to perform a handover to another cell or frequency, the base station or the network can construct a handover message (RRCReconfiguration message) containing handover configuration information (which may include configuration information of a target base station for performing a handover) and transmit it to the UE.

In steps 1d-95 and 1d-100, the UE performs a handover procedure (e.g., a random access procedure or a synchronization procedure to a target base station, etc.) according to the handover configuration information.

If the handover is successfully performed, in step 1d-90, the UE can construct an RRCRecofigurationComplete message and transmit it to the target base station.

The configuration information of the target base station may include at least one of bearer configuration information, cell group configuration information, cell configuration information, or each layer device information (e.g., at least one of an SDAP layer device, a PDCP layer device, an RLC layer device, a MAC layer device, or a PHY layer device).

The RRC message (the RRCSetup message, the RRCResume message 1d-25, or the RRCReconfiguration message 1d-70 or 1d-80) may include (or configure) one or more of bearer configuration information, cell group configuration information, cell configuration information, or each layer device information (e.g., an SDAP layer device, a PDCP layer device, an RLC layer device, a MAC layer device, or a PHY layer device) of the UE, and may contain one or more of the following information.
- An indicator (or an activation or deactivation indicator) indicating whether to configure the data protection procedure or the data protection release procedure of each layer device (e.g., MAC layer device) for uplink or downlink by bearer, by layer device, by cells to which L1/L2 triggered mobility (LTM) configuration is applied, or by candidate cells to which LTM configuration is applied.
- Configuration information for performing the data protection procedure or the data protection release procedure of each layer device (e.g., MAC layer device) for uplink or downlink by bearer, by layer device, by cells to which LTM configuration is applied, or by candidate cells to which LTM configuration is applied. For example, it may include information about a security key, a security algorithm, update parameters, security algorithm input parameters, or time parameter configuration information.
- Configuration information for indicating whether to activate, deactivate, reconfigure, or release the data protection procedure or the data protection release procedure configured in each layer device (e.g., MAC layer device) for uplink or downlink by bearer, by layer device, by cells to which LTM configuration is applied, or by candidate cells to which LTM configuration is applied.

In another method, a new MAC control information (MAC CE) may be defined instead of the RRC message as above, and the MAC CE may be transmitted while including configuration information for indicating whether to activate, deactivate, reconfigure, or release the data protection procedure or the data protection release procedure configured in each layer device (e.g., MAC layer device) for downlink or uplink.

The RRC message may be configured to the UE by including at least one of a security key for the function, a security algorithm (e.g., at least one of a ciphering algorithm or an integrity protection algorithm), a security algorithm input parameter, whether the ciphering procedure is configured, whether the integrity protection procedure is configured, or an update parameter for deriving the security key.

According to an embodiment of the disclosure, a method for delivering a configuration method for a candidate neighbor cell that supports L1/L2 inter-cell handover is proposed. For example, methods for applying a delta configuration to a candidate neighbor cell based on RRC configuration information for one reference cell are proposed.

According to an embodiment of the disclosure, a configuration for a reference cell (reference cell configuration) may be defined and delivered using at least one of the following methods. In the disclosure, the reference cell configuration may be used interchangeably with terms such as reference cell, reference configuration, etc.
1. First reference cell configuration method: Defining a current source cell (primary cell (PCell) or secondary cell (SCell)) as the reference cell
   - If PCell is the reference cell, the reference cell can be indicated via an explicit cell indicator or implicitly expressed as the reference cell (the standard defines the corresponding rule)
   - If SCell is the reference cell, the reference cell can be indicated via an explicit cell indicator (including a new indicator)
2. Second reference cell configuration method: Defining one of candidate neighbor cells as the reference cell
   - A first candidate neighbor cell is indicated as the reference cell (via an explicit indicator or implicitly expressed (the standard defines the corresponding rule))
   - One of candidate neighbor cells is indicated as the reference cell via an explicit indicator
3. Third reference cell configuration method: Defining a new additional cell as the reference cell

A field for new cell configuration is defined and configuration for the field is defined as the reference cell configuration
According to an embodiment of the disclosure, when delivering (or transmitting a configuration (or configuration information) for a candidate neighbor cell that supports L1/L2 inter-cell handover, the configuration information for a target candidate neighbor cell can be considered with at least one of cell-level, cell group level, and RRC message level. The method of delivering the configuration information for the candidate neighbor cell is possible with any of the three levels, but since it is not significantly related to the method of applying the delta configuration, the delta configuration proposed in the disclosure can be applied to the delivering method according to the three levels.

According to an embodiment of the disclosure, L1/L2 inter-cell handover can be supported under intra CU conditions. That is, a plurality of DUs may exist in one CU, and each DU may include a plurality of cells.

Specifically, the configuration for the serving cell and each candidate neighbor cell should be delivered to the CU that generates an RRC message actually, and the CU and the DU can perform communication via the F1 interface. Each DU can collect configuration information for the candidate neighbor cell and deliver the configuration information for the neighbor cell to the CU via the F1 interface, and the CU can generate an RRC message based on the received configuration information and deliver it to the source cell.

FIG. 1E is a diagram illustrating a process of delivering configuration information about neighbor cells for L1/L2-based handover to the neighbor cells according to an embodiment of the disclosure.

In step 1e-10, a user equipment (UE) 1e-01 in an RRC connected state performs data transmission and reception with a source cell 1 1e-02 and may deliver measurement values for a serving cell and neighbor cells to the source cell 1 1e-02 according to configured measurement and report (Measurement report).

The source cell 1 1e-02 may include a source cell-distributed unit (Source Cell-DU#1). Actually, the measurement value may be delivered to a gNB-central unit (gNB-CU) 1e-03. This is because the gNB-CU 1e-03 is responsible for processing a radio resource control (RRC) message and determines mobility.

In step 1e-15, the gNB-CU 1e-03 may generate a message (L1/L2 config request message) requesting configuration information for L1/L2-based handover to at least one of neighbor cells (Candidate cell1-DU#2 1e-04 or Candidate cellN-DU#M 1e-05) based on the measurement (or measurement value) report received from the UE, and may deliver the message (L1/L2 config request message) requesting configuration information for L1/L2-based handover via the F1 interface.

In FIG. 1E, the candidate cell is illustrated in connection with the DU, but this is only for the purpose of explaining the disclosure, and the scope of the disclosure is not limited thereto. Specifically, the candidate cell and the DU may be mapped 1:1, or a plurality of candidate cells may be included in one DU.

In addition, the above message (L1/L2 config request message) requesting configuration information for L1/L2-based handover may be a legacy handover request message, a UE context request message, a UE context modification request message, etc., or may be a new F1 or Xn message.

The message (L1/L2 config request message) requesting configuration information for L1/L2-based handover may notify the neighbor cells of being determined as candidate cells for the L1/L2-based handover, and may also request RRC configuration information to be applied when the L1/L2-based handover is performed to the corresponding cell.

As described above, the RRC configuration information (Pre-Config1, Pre-ConfigN) applied when the L1/L2-based handover is performed may have at least one of the structures of the cell level, cell group level, and RRC message level. In addition, the three reference cell configuration methods described above may be applied in the disclosure, and in particular, the message requesting the configuration information for the L1/L2-based handover may simultaneously deliver information and configuration for the reference cell.

The above message may include an indicator requesting at least one of the candidate neighbor cells 1e-04 and 1e-05 to deliver configuration information for L1/L2-based handover by applying delta configuration. The indicator may be requested for each cell or may be requested commonly to all cells.

In step 1e-20, the candidate neighbor cells 1e-04 and 1e-05 that have received the message requesting configuration information for L1/L2-based handover may generate configuration information for each candidate neighbor cell based on delta configuration when L1/L2-based handover is applied, based on the delivered configuration information of the reference cell. Thereafter, in step 1e-20, each of the candidate neighbor cell 1e-04 and 1e-05 may contain the generated configuration information for L1/L2-based handover in a configuration information response message for L1/L2-based handover (L1/L2 config response message) and deliver it to the gNB-CU 1e-03.

In step 1e-30, the source cell (or the source cell DU) 1e-02 may receive an RRC message (e.g., RRCReconfiguration message) generated by the gNB-CU 1e-03 and deliver it to the UE 1e-01. The RRC message may include configuration information (Pre-Config1, Pre-ConfigN) for the candidate neighbor cells to which L1/L2-based handover is applied.

More specifically, the configuration transmitted by the gNB to the UE in the step may include bearer configuration information of the UE, cell group configuration information, cell configuration information, or each layer device information (e.g., at least one of an SDAP layer device, a PDCP layer device, an RLC layer device, a MAC layer device, or a PHY layer device), and may include at least one of the following pieces of information.
- An indicator (or an activation or deactivation indicator) indicating whether to configure the data protection procedure or the data protection release procedure of each layer device (e.g., MAC layer device) for uplink or downlink by bearer, by layer device, by cells to which L1/L2 triggered mobility (LTM) configuration is applied, or by candidate cells to which LTM configuration is applied.
- Configuration information for performing the data protection procedure or the data protection release procedure of each layer device (e.g., MAC layer device) for uplink or downlink by bearer, by layer device, by cells to which LTM configuration is applied, or by candidate cells to which LTM configuration is applied. For example, it may include information about a security key, a security algorithm, update parameters, security algorithm input parameters, or time parameter configuration information. Specific parameter information is further described in the Embodiment 1m below.
- Configuration information for indicating whether to activate, deactivate, reconfigure, or release the data protection procedure or the data protection release procedure configured in each layer device (e.g., MAC layer device) for uplink or downlink by bearer, by layer device, by cells to which LTM configuration is applied, or by candidate cells to which LTM configuration is applied.

In another method, a new MAC control information (MAC CE) may be defined instead of the RRC message as above, and the MAC CE may be transmitted while including configuration information for indicating whether to activate, deactivate, reconfigure, or release the data protection procedure or the data protection release procedure configured in each layer device (e.g., MAC layer device) for downlink or uplink.

The RRC message may be configured to the UE by including at least one of a security key for the function, a security algorithm (e.g., at least one of a ciphering algorithm or an integrity protection algorithm), a security algorithm input parameter, whether the ciphering procedure is configured, whether the integrity protection procedure is configured, or an update parameter for deriving the security key.

In step 1e-35, the UE 1e-01 that has received the RRC message may perform a procedure of decoding the RRC message and processing.

The above processing may include at least one of ASN.1 decoding or validation of the received message and a method of storing and managing the configuration contents.

In step 1e-40, the UE 1e-01 may perform L1 measurement for each candidate neighbor cell and report L1 measurement information (or measurement value) to at least one of the source cell 1e-02 or the gNB-CU 1e-03. At least one of the source cell 1e-02 or the gNB-CU 1e-03 that has received the measurement information may determine a handover.

In step 1e-45, the source cell 1e-02 or the gNB-CU 1e-03 that has determined the handover may indicate L1/L2 handover to the UE. In step 1e-45, at least one of MAC CE or downlink control information (DCI) including a handover indicator may be used as L 1/L2 signaling.

In steps 1e-40 and 1e-45 above, at least one of the source cell or the source gNB CU may receive L1 measurement information (or measurement value) for determining L1/L2 handover and make a handover decision.

If the gNB-CU 1e-03 makes all decisions, the source cell 1e-02 may deliver the L1 measurement information (or measurement value) received from the UE to the gNB-CU 1e-03, and deliver L1/L2 signaling to the UE 1e-01 according to the handover decision indication of the gNB-CU 1e-03.

On the other hand, if the source cell 1e-02 determines the final handover, the source cell 1e-02 may make the handover decision by itself without delivering the L1 measurement information (or measurement value) to the gNB. More specifically, the source cell 1e-02 may decide the handover by itself based on the measurement information (or measurement value) for determining the handover for each candidate neighbor cell received from the previous gNB, and deliver L1/L2 signaling to the UE according to the decision. The measurement information (or measurement value) may include a threshold value and measurement information.

The disclosure is characterized by applying a data protection procedure or a data protection release procedure to the corresponding MAC CE in a situation where the LTM MAC CE indicates a handover at the corresponding step. Applying the above procedure may mean that at least one of layer 2-based ciphering, deciphering, or integrity protection procedures for the corresponding MAC CE is applied. The data protection procedure or the data protection release procedure for the MAC CE proposed in the disclosure will be described in detail in a later embodiment.

When the L1/L2 handoverindication is delivered to the UE through the LTM MAC CE to which the data protection procedure is applied, the UE can apply the data protection release procedure to the LTM MAC CE and restore and apply the LTM MAC CE.

In step 1e-50, the UE 1e-01 may start a handover procedure and start a timer for L1/L2 handover. The timer may be a newly configured timer or may reuse the existing T304 timer.

In step 1e-55, the UE 1e-01 may apply configuration information for a target cell to which L1/L2 handover is applied (Apply target cell configuration).

The configuration information for the target cell may include one of the configuration information for neighbor cells received in advance in step 1e-30.

In step 1e-60, the UE 1e-01 may perform random access to the target cell if the random access is required according to the applied configuration information. If the random access is not indicated **in** the configuration information for the target cell or is not necessary (if uplink synchronization has already been performed or made), the UE 1e-01 may omit the random access procedure.

In step 1e-65, the UE 1e-01 may perform a handover completion procedure with the target cell (HO complete indication). The handover completion may vary depending on the method of indicating the handover completion. More specifically, if the configuration of the target cell is received at the RRC message level, it may be a process of delivering the RRCReconfiugrationComplete message, and if the configuration of the target cell is received at the cell level or cell group level, a new handover completion indication message (new RRC message, or MAC CE) may replace the procedure.

Although not shown in the drawing, if a change in the reference cell and the reference cell configuration is required, the configuration-related operations may be updated with F1 interface messages between the gNB-CU 1e-03 and the neighbor cells. In particular, if the reference cell configuration is changed, the aforementioned steps 1e-15 to 1e-30 may be repeated to perform the change in the reference cell and the reference cell configuration, and the changed configuration information may be transmitted to the UE.

In addition, although not shown in the drawing, a new MAC CE or DCI may be introduced to dynamically indicate the candidate neighbor cells to which the L1/L2-based handover is applied, and dynamically indicate or release the valid configuration (release the L1/L2-based handover configuration that was previously transmitted). Alternatively, the related operations may be performed internally by the gNB and no separate signaling may be transmitted to the UE.

According to an embodiment of the disclosure, for a data protection procedure or a data protection release procedure for an LTM MAC CE, the RRC configuration procedure including the data protection procedure in step 1e-30 and the generation and transmission/reception operations of the LTM MAC CE in step 1e-45 are associated.

The following embodiments describe detailed configuration methods for related procedures, UE operations, and structures when the data protection procedure is applied to MAC CE.

FIG. 1F is a diagram illustrating a structure of a protocol layer device according to an embodiment of the disclosure.

In FIG. 1F, when the UE receives a radio resource control (RRC) message (e.g., RRCReconfiguration message) from the gNB as in FIG. 1D, the UE can acquire at least one of UE's connection configuration information, bearer configuration information, or protocol layer device information. Thereafter, the UE can establish and configure protocol layer devices as in 1f-05.

For example, the UE may establish one physical (PHY) layer device and one medium access control (MAC) layer device, and configure a plurality of bearers to be established and connected to the MAC layer device. The bearers may be composed of radio link control (RLC) layer devices or packet data convergence protocol (PDCP) layer devices.

FIGS. 1GA, 1GB, and 1GC are diagrams illustrating a process of processing data according to an embodiment of the disclosure.

FIGS. 1GA, 1GB, and 1GC are diagrams illustrating a procedure for processing data received from an upper layer device in each protocol layer device of a bearer and transmitting the data, or a procedure for processing data received from a lower layer device in each protocol layer device of a bearer and transmitting the data to an upper layer device, according to an embodiment of the disclosure.

If a ciphering procedure or security key configuration information is configured in a packet data convergence protocol (PDCP) layer device, the UE may derive security keys in a radio resource control (RRC) layer device and perform the ciphering procedure by applying the security key when establishing or re-establishing the PDCP layer device.

In 1g-05, if the PDCP layer device receives data (e.g., PDCP SDU) from an upper layer device, and if a header compression procedure (or a ciphering procedure) is configured with an RRC message, the UE may perform a header compression procedure (or a ciphering procedure) on the data. Afterwards, the PDCP may assign a PDCP serial number, construct a PDCP header to construct the data as a PDCP PDU, and deliver it to a lower layer device.

The above data (PDCP PDU) may be delivered to a MAC layer device by an RLC layer device that configures an RLC serial number and header field values and attaches an RLC header.

The MAC layer device may configure a length of the data, configure a length field and a MAC subheader field value such as a logical channel identifier corresponding to the data, attach a MAC subheader, and transmit it to a lower layer device. When necessary or when uplink transmission resources are insufficient, the RLC layer device may perform a data segmentation procedure and update field values of the RLC header or configure segmentation information.

In 1g-10, when the UE receives data from a lower layer device, the UE may read the MAC subheader, identify the length field to separate the data or identify the logical channel identifier, and demultiplex the data to deliver it to the corresponding RLC layer device.

Upon receiving the data, the RLC layer device may read the RLC header, check whether segmenation is made, remove the RLC header from non-segmented data, and deliver the data to the PDCP layer device. The RLC layer device may store segmented data in a buffer, construct complete data by reassembling all the segmented data received for the RLC serial number corresponding to the segmented data, and deliver the reassembled data to the PDCP layer device.

In the case where the ciphering procedure is configured, the PDCP layer device may perform the deciphering procedure, and if deciphered data are sorted in the order of the PDCP serial number or the COUNT value, it may deliver the data to an upper layer device in the ascending order of the COUNT value. At this time, in the case where the header compression procedure is configured, the header decompression procedure may be applied to the data and the data may be delivered to an upper layer device. If the header compression procedure is not configured, the header compression procedure or the header decompression procedure may be omitted.

According to an embodiment of the disclosure, the ciphering procedure can be extended and applied to the data protection procedure of the MAC layer device proposed in the disclosure.

In the case where the header compression procedure, the integrity protection procedure, or the ciphering procedure is configured in the PDCP layer device in 1g-20, a transmitting PDCP layer device may apply the header compression procedure to upper layer device data. The PDCP layer device may perform the integrity protection procedure on the header-compressed data or the PDCP header, attach a 4-byte MAC-I field to the end, and apply the ciphering procedure to the data with the integrity protection procedure applied and the MAC-I field.

In 1g-25, a receiving PDCP layer device at the receiver may apply the deciphering procedure to data received from a lower layer device. Thereafter, it may apply the integrity verification procedure to the ciphered data based on the 4-byte MAC-I field attached to the end and identify whether integrity has failed.

Data that has failed the integrity verification procedure is discarded, and data that has passed the integrity verification procedure may be delivered to an upper layer device in ascending order of the COUNT value if the data is sorted in the order of the PDCP serial number or COUNT value.

In the case where the header compression procedure is configured for data that has passed the integrity verification procedure, the header decompression procedure may be applied to the data and the data may be delivered to an upper layer device in ascending order of the COUNT value. If the header compression procedure is not configured, the header compression procedure or the header decompression procedure may be omitted.

In 1g-30, in the case where the header compression procedure or the integrity protection procedure is configured in the PDCP layer device, or the ciphering procedure is not configured, the transmitting PDCP layer device may apply the header compression procedure to the upper layer device data. It may perform the integrity protection procedure on the header-compressed data or the PDCP header, attach a 4-byte MAC-I field to the end, attach the PDCP header to the front of the data with the integrity protection procedure applied and the MAC-I field, and deliver it to a lower layer device.

In 1g-35, the receiving PDCP layer device at the receiver may check whether the integrity has failed by applying the integrity verification procedure based on the 4-byte MAC-I field attached to the end of the data received from a lower layer device. The data that has failed the integrity verification procedure is discarded, and if the data that has passed the integrity verification procedure is sorted in the order of the PDCP serial number or COUNT value, the data may be delivered to an upper layer device in the ascending order of the COUNT value. If the header compression procedure is configured for the data that has passed the integrity verification procedure, the header decompression procedure may be applied to the data and then the data may be delivered to an upper layer device in the ascending order of the COUNT value. If the header compression procedure is not configured, the header compression procedure or the header decompression procedure may be omitted.

The data transmitted above may be generated and transmitted in a repeated structure of header and data, as in 1g-15. For example, it may have data with a repeated structure, like a header (MAC subheader, RLC header, PDCP header, or SDAP header), data, a header (MAC subheader, RLC header, PDCP header, or SDAP header), and data. Therefore, when generating such data having a repeated structure with fixed-size headers, a hardware accelerator (or hardware engine) may be applied to perform faster data processing, thereby reducing the data processing time.

The above hardware accelerator may be applied or called and used when adding or removing the header (MAC subheader, RLC header, PDCP header, or SDAP header), performing the ciphering procedure or the deciphering procedure, or performing the integrity protection procedure or the integrity verification procedure.

The integrity protection procedure described above can be extended and applied to the data protection procedure of the MAC layer device proposed in the disclosure.

FIG. 1H is a diagram illustrating an integrity protection, integrity verification, ciphering, or deciphering procedure according to an embodiment of the disclosure.

With reference to FIG. 1H, 1h-05 shows an integrity protection procedure.

The integrity protection procedure may be performed in the case where the integrity protection procedure is configured. When the integrity protection procedure is configured, the integrity protection procedure may be performed based on security keys derived (or applied) from an upper layer device (e.g., a radio resource control (RRC) layer device or a non-access stratum (NAS) layer device) and COUNT values or bearer identifiers corresponding to data to which the integrity protection procedure is to be applied. For example, the data to which the integrity protection procedure is to be applied may be calculated in units of 8 bytes (64 bits) according to an integrity protection algorithm, finally a 4-byte (32-bit) MAC-I may be calculated, and then the Message Authentication Code for Integrity (MAC-I) field may be attached to the very end of the data.

The integrity verification procedure at the receiver may compare a 4-byte X-MAC field value, obtained by applying the integrity verification algorithm to the received data in reverse, and a MAC-I value attached to the data, and if the two values are the same, it may be determined that the integrity verification of the data has been successfully performed. If the two values are different, it may be determined that the integrity verification has failed, and the data may be discarded.

As such, the integrity protection procedure or the integrity verification procedure is a very complex procedure with high data processing complexity, and the data processing time is long. The data on which the integrity protection procedure has been performed is transmitted without the data itself being changed, but with the original data maintained and an additional new field (e.g., MAC-I field) added to the end. Therefore, the data on which the integrity protection procedure has been applied can be read by an unspecified number of entities other than the receiving target.

On the other hand, the main purpose is to allow the target of receiving the data to verify whether the data has been tampered with by checking the new field in case a malicious intermediary tampers with (or compromises) the data. For example, if it is determined that the data has been tampered with, the target of receiving the data can discard the data without reading it. In other words, only data that has successfully passed the integrity verification procedure can be read and processed.

With reference to FIG. 1H, 1h-10 shows a ciphering procedure.

The ciphering procedure may be performed in the case where the ciphering procedure is configured. For example, based on the security keys derived (or applied) from an upper layer device (e.g., the RRC layer device or the NAS layer device) and COUNT values or bearer identifiers corresponding to the data to which the ciphering is to be applied, a key stream having the same length as the data may be generated through a ciphering algorithm. Also, the ciphered data may be generated by performing an XOR procedure on the key stream generated above and the data to be ciphered.

With reference to FIG. 1H, 1h-15 shows a deciphering procedure.

Based on security keys derived (or applied) from an upper layer device (e.g., the RRC layer device or the NAS layer device) and COUNT values or bearer identifiers corresponding to the data to which deciphering is to be applied, the deciphering procedure may generate a key stream of the same length as the data through a ciphering (or deciphering) algorithm on the ciphered data. Then, the original data may be generated by performing an XOR procedure on the key stream generated above and the data to be deciphered.

That is, the receiver may perform the deciphering procedure by performing an XOR procedure on the key stream generated through the deciphering algorithm and the ciphered data received. As such, the ciphering procedure or the deciphering procedure is a very complex procedure with high data processing complexity, and takes a long time to process the data.

As described above, data that has undergone the ciphering procedure is changed in itself. That is, the original data is changed into a new bit stream according to the ciphering algorithm. Therefore, data that has undergone the ciphering procedure cannot be read by an unspecified number of entities other than the receiving target. Therefore, the main purpose of the ciphering procedure is to protect personal information by preventing any malicious intermediary from reading the data in the middle. That is, only the receiving target can decipher the data that has undergone the ciphering procedure and change it back to the original data, thereby reading it.

The security key used when performing the data protection procedure may include a symmetric key or an asymmetric key. The symmetric key refers to a security key that, when the sender and the receiver have the same master key (e.g., provisioning) and shares a separate parameter with each other, each of the sender and the receiver derives and uses a new key based on the shared parameter and its own master key. If the data protection procedure is performed on the data to be transmitted using the security key derived by the sender, the received data can be read or delivered to prevent security threats when the data protection release procedure is successfully performed using the key derived from the receiver. Since the symmetric key is shared only between the sender and the receiver, it may also be called a shared key. Since the symmetric key shares the same key between the sender and the receiver, the data protection procedure or the data protection release procedure can be performed bidirectionally.

The asymmetric key is generated as a pair of a private key (or secret key) and a public key. The sender keeps the private key (or secret key) securely and does not disclose it, and the public key can be shared with the receiver as a key that does not pose a security threat even if disclosed to many people.

Therefore, if the sender performs the data protection procedure with the private key on the data to be transmitted, the receiver can read or deliver the data to prevent security threats when the data protection release procedure is successfully performed with the public key on the data received.

The asymmetric key can apply the data protection procedure only with the private key, and can only perform the data protection release procedure with the public key. Therefore, the data protection procedure can be performed only unidirectionally, and if the data protection procedure or the data protection release procedure needs to be performed bidirectionally, one pair of asymmetric keys may be further required.

The data protection procedure or data protection release procedure proposed in the disclosure can be used by applying the symmetric key or asymmetric key as a security key. In addition, the data protection procedure or data protection release procedure can be extended and used with other security key scheme.

FIG. 1I is a diagram illustrating a process of processing data at a protocol layer of a UE or a base station according to an embodiment of the disclosure.

According to an embodiment of the disclosure, the UE and the base station can perform a security configuration procedure in the process of establishing a radio resource control (RRC) connection as described above in FIG. 1D.

In the security configuration procedure, the UE and the base station may perform a procedure for agreeing on security configuration information such as a security key or a security algorithm (e.g., a ciphering or deciphering algorithm, or an integrity protection or integrity verification algorithm) to be applied to perform a data protection procedure or a data protection release procedure, or a procedure for configuring or activating a security procedure (e.g., a data protection procedure or a data protection release procedure).

The procedure for agreeing on security configuration information or the procedure for configuring or activating a security procedure may be performed by transmitting and receiving a SecurityModeCommand message or a SecurityModeComplete message between the base station and the UE. Or, it may also be performed as an Authentication and Key Agreement (AKA) procedure.

When the security procedure is configured and activated as described above, the UE may perform the following procedure if the integrity protection procedure is configured when transmitting data for a bearer (singaling radio bearer (SRB) or data radio bearer (DRB)).

In order to perform the integrity protection procedure on data (PDCP service data unit (SDU)) received from an upper layer device in a packet data convergence protocol (PDCP) layer device 11-10, the UE may perform the integrity protection procedure (e.g., applying an integrity protection algorithm) on the data and headers (PDCP header, SDAP header, headers (e.g., uplink data compression (UDC) header or Ethernet header compression (EHC) header) generated by a header (or data) compression function configured in the PDCP layer device, or header or data compressed according to the configured compression function). For example, the integrity protection algorithm may be applied to the headers or data, and the generated Message Authentication Code - Integrity (MAC-I) field may be attached to the end of the data to complete the integrity protection procedure.

The ciphering procedure may be performed on data received from the upper layer device in the case where the ciphering procedure is configured, or performed on data with integrity protection applied in the case where the integrity protection is configured. The ciphering procedure may be applied to the remaining part excluding a PDCP header or an SDAP header (e.g., PDCP SDU, UDC header or EHC header if the header compression procedure or the data compression procedure is configured, compressed header, compressed data, data to which the integrity protection is applied, or MAC-I field). If the header compression procedure (e.g., robust header compression (ROHC) or Ethenet header compression (EHC) function) or the data compression procedure (uplink data compression (UDC)) is configured in the PDCP layer device, the header compression procedure or the data compression procedure may be performed before the integrity protection procedure or the ciphering procedure.

As described above, the PDCP layer device may complete data processing according to the configured function, generate a PDCP protocol data unit (PDU) based on the PDCP header and data, and deliver it to a lower layer device. The PDCP layer device 1i-10 may generate PDCP control data in a necessary case, and prevent the data protection procedure from being applied to the PDCP control data. The necessary case may include a case where a condition for generating the PDCP control data (PDCP control PDU) is satisfied.

The PDCP control data may include a PDCP status report (including information indicating successful data reception corresponding to each PDCP serial number as ACK or NACK with a 1-bit indicator), feedback information for a header compression protocol, feedback information for a data compression protocol, or information for configuring a header compression protocol. The data protection procedure may include at least one of the integrity protection procedure or the ciphering procedure. This is because, in the past, it was assumed that security threats could be resolved by implementation of a base station or UE after an RRC connection was established, so control data between protocol layer devices could be considered as not subject to protection.

In the above, the PDCP PDU may be considered as an RLC SDU in a radio link control (RLC) layer device, and the RLC layer device 1i-20 may perform data processing. For example, data segmentation may be performed as needed (for example, when transmission resources are insufficient). In the above, the RLC layer device may construct an RLC header to generate an RLC PDU and deliver it to a media access control (MAC) layer device.

If needed, the RLC layer device may generate RLC control data (for example, an RLC status report (including information indicating successful data reception corresponding to each RLC sequence number as ACK or NACK)) and deliver it to a lower layer device as the RLC PDU for transmission. The needed case may include a case where a condition for generating the RLC control data (RLC control PDU) is satisfied. Since the data protection procedure is performed only in the PDCP layer device, the data protection procedure may not be applied to the RLC control data generated in the RLC layer device.

The MAC layer device 1i-30 may consider the RLC PDU as a MAC SDU. The MAC layer device may receive RLC PDUs from different RLC layer devices connected to the MAC layer device. The MAC layer device may generate MAC subheaders based on different MAC SDUs and concatenate them to generate respective MAC subPDUs. In addition, the MAC layer device may construct MAC control information (MAC control element (CE)) if necessary (for example, according to the generation condition of MAC control information), generate MAC subheaders, and concatenate them to generate MAC subPDUs. Or, the MAC subPDU may be composed of a MAC subheader for padding, or a padding and a MAC subheader.

The MAC layer device may construct a MAC PDU with at least one or more MAC subPDUs and deliver the MAC PDU to a lower layer. The MAC PDU may refer to a data unit composed of at least one or more MAC subPDUs.

The case of constructing downlink data may include the case where the base station transmits data to the UE, and the case of constructing uplink data may include the case where the UE transmits data to the base station.

In the case where the MAC layer device constructs downlink data based on the generated MAC subPDU, it may construct the MAC PDU in the following manner. For example, when padding is required, it may be positioned at the very end of the MAC PDU composed of MAC subPDUs. When the MAC PDU includes at least one piece of MAC control information, the at least one piece of MAC control information may be positioned at the very front of the MAC PDU. When the MAC PDU includes at least one or more MAC SDUs, the at least one or more MAC SDUs may be positioned after the MAC control information.

In addition, in the MAC subPDU, the MAC subheader may always be positioned before the MAC SDU or MAC control information or padding, and the MAC PDU may be composed of the MAC subPDUs as described above and delivered to a lower layer device for transmission.

As described above, in the case of downlink data, there is an advantage in that important control information such as MAC control information may be positioned at the very front so that the UE can quickly process the control information first. However, since the data protection procedure is performed only in the PDCP layer device, the data protection procedure may not be applied to the MAC control data generated in the MAC layer device.

Meanwhile, if padding is required when constructing uplink data based on the generated MAC subPDUs in the MAC layer device 11-30, it may be positioned at the very end of the MAC PDU composed of MAC subPDUs. If at least one piece of MAC control information is included, it may be positioned at the very end of the MAC PDU, or if there is padding, it may be positioned before the padding, and the MAC SDUs may be positioned before the MAC control information. In addition, in the MAC subPDU composed of the MAC subheader and the MAC SDU or the MAC control information or the padding, the MAC subheader may always be positioned before the MAC SDU or the MAC control information or the padding, and the MAC PDU may be composed of the MAC subPDUs as described above and delivered to a lower layer device for transmission.

In the case of uplink data, the MAC control information may be positioned at the very end so that the UE can generate MAC SDUs in advance to process them quickly, process dynamically generated MAC control information in parallel, complete the generation of MAC control information, and then attach the MAC control information to the back of the pre-processed MAC SDUs, thereby facilitating the implementation of the UE. In addition, the data processing speed can be increased due to the parallel processing. Since the data protection procedure is performed only in the PDCP layer device, the data protection procedure may not be applied to the MAC control data generated in the MAC layer device.

At the receiver, when the MAC layer device 1i-30 receives the MAC PDU from a lower layer device, it may process data in units of MAC subPDU. If the MAC subPDU includes MAC control information, the MAC layer device may read and remove the MAC subheader, identify the type of MAC control information based on a logical channel identifier of the MAC subheader, interpret the indication of the MAC control information, and perform the corresponding procedures. If the MAC subPDU includes a MAC SDU, the device may read and remove the MAC subheader, and deliver the MAC SDU to an upper layer device (RLC layer device) as an RLC PDU according to the logical channel identifier contained in the MAC subheader. In addition, if the MAC subPDU indicates or includes padding, the MAC subPDU corresponding to the padding may be discarded.

The RLC layer device 11-20 that receives the RLC PDU from the MAC layer device above may read or remove the RLC header and deliver the received RLC SDU as a PDCP PDU to an upper layer device (e.g., a PDCP layer device). If the RLC PDU received above includes an RLC SDU segment, the RLC layer device may reassemble the received RLC PDUs based on the RLC sequence number of the RLC header or segmentation information (SI field) or segmentation offset information (SO field) to form a complete RLC SDU and then deliver it to an upper layer device as a PDCP PDU.

If the received RLC PDU is RLC control data (RLC control PDU), the RLC layer device may read and interpret the RLC control data (e.g., RLC status report) to identify successfully delivered data and unsuccessfully delivered data with ACK or NACK information. If necessary, a retransmission procedure may be performed on data that was not successfully delivered. In addition, the RLC layer device may discard duplicated data or data outside the RLC reception window based on the RLC sequence number of the RLC header.

The PDCP layer device that receives the PDCP PDU from the RLC layer device may read the PDCP header and derive a COUNT value based on the PDCP sequence number information of the PDCP header. In addition, the PDCP layer device may discard duplicated data or data outside the PDCP reception window based on the COUNT value.

In addition, the PDCP layer device may identify the indicator of the PDCP header received above, and if the PDCP PDU is a PDCP data PDU and the data protection procedure is configured, the PDCP layer device may perform a data release procedure. For example, if the ciphering procedure or the deciphering procedure is configured in the PDCP layer device, the PDCP layer device may perform the deciphering procedure for PDCP SDU, excluding the PDCP header of the PDCP PDU, based on the configured security key or security algorithm or the COUNT value. In addition, if the integrity protection procedure or the integrity verification procedure is configured in the PDCP layer device, the PDCP layer device may perform the integrity verification procedure on the PDCP PDU or the deciphered PDCP SDU and the PDCP header based on the configured security key or security algorithm or the COUNT value.

As described above, if the data protection release procedure is successfully performed, the PDCP layer device may perform a header decompression procedure or a data decompression procedure on the PDCP SDU if a header compression function or a data compression function is configured for the PDCP SDU, and deliver it to an upper layer device in ascending order of the COUNT value.

If the PDCP layer device 1i-10 identifies the indicator of the PDCP header received above, and if the PDCP PDU is a PDCP control PDU, the PDCP layer device may read directly the PDCP control data (PDCP control PDU) without applying the data protection release procedure (e.g., the deciphering procedure or the integrity verification procedure) to the PDCP control PDU.

The PDCP control data in the above may indicate a PDCP status report indicating successful transmission by indicating ACK or NACK information as a bitmap, feedback for a header compression function (e.g., robust header compression (ROHC) or Ethernet header compression (EHC)) (interspersed ROHC feedback or EHC feedback), or feedback for a data compression function (e.g., uplink data compression (UDC)).

The RLC control data in the above may indicate an RLC status report indicating ACK or NACK information in an ARQ procedure of the RLC layer device operating in AM mode, including an RLC sequence number, segment offset (SO), a range of RLC sequence numbers (NACK_Range), or a successfully received RLC sequence number.

The MAC control information in the above may indicate pieces of MAC control information defined differently according to each logical channel identifier (logical channel identity (LCID) or extended LCID (eLCID)) for downlink or uplink as shown in tables below. For example, the pieces of MAC control information may indicate MAC control information defined in the following tables for buffer status report, power headroom report, path loss report, downlink beam configuration, uplink beam configuration, cell status (activation or deactivation) configuration, replication status (activation or deactivation) configuration, discontinuous reception (DRX) configuration, random access procedure, timing advance (TA) value configuration, or channel status report.

### Values of LCID for DL-SCH

| **Codepoint/Index** | **LCID values** |
|---|---|
| 0 | CCCH |
| 1-32 | Identity of the logical channel |
| 33 | Extended logical channel ID field (two-octet eLCID field) |
| 34 | Extended logical channel ID field (one-octet eLCID field) |
| 35-46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

### Values of two-octet eLCID for DL-SCH

| **Codepoint** | **Index** | **LCID values** |
|---|---|---|
| 0 to (2¹⁶ - 1) | 320 to (2¹⁶ + 319) | Identity of the logical channel |

### Values of one-octet eLCID for DL-SCH

| **Codepoint** | **Index** | **LCID values** |
|---|---|---|
| 0 to 244 | 64 to 308 | Reserved |
| 245 | 309 | Serving Cell Set based SRS Spatial Relation Indication |
| 246 | 310 | PUSCH Pathloss Reference RS Update |
| 247 | 311 | SRS Pathloss Reference RS Update |
| 248 | 312 | Enhanced SP/AP SRS Spatial Relation indication |
| 249 | 313 | Enhanced PUCCH Spatial Relation Activation/Deactivation |
| 250 | 314 | Enhanced TCI States Activation/Deactivation for UE-specific PDSCH |
| 251 | 315 | Duplication RLC Activation/Deactivation |
| 252 | 316 | Absolute Timing Advance Command |
| 253 | 317 | SP Positioning SRS Activation/Deactivation |
| 254 | 318 | Provided Guard Symbols |
| 255 | 319 | Timing Delta |

### Values of LCID for UL-SCH

| **Codepoint/Index** | **LCID values** |
|---|---|
| 0 | CCCH of size 64 bits (referred to as "CCCH1" in TS 38.331 [5]) |
| 1-32 | Identity of the logical channel |
| 33 | Extended logical channel ID field (two-octet eLCID field) |
| 34 | Extended logical channel ID field (one-octet eLCID field) |
| 35-44 | Reserved |
| 45 | Truncated Sidelink BSR |
| 46 | Sidelink BSR |
| 47 | Reserved |
| 48 | LBT failure (four octets) |
| 49 | LBT failure (one octet) |
| 50 | BFR (one octet Cᵢ) |
| 51 | Truncated BFR (one octet Cᵢ) |
| 52 | CCCH of size 48 bits (referred to as "CCCH" in TS 38.331 [5]) |
| 53 | Recommended bit rate query |
| 54 | Multiple Entry PHR (four octets Cᵢ) |
| 55 | Configured Grant Confirmation |
| 56 | Multiple Entry PHR (one octet Cᵢ) |
| 57 | Single Entry PHR |
| 58 | C-RNTI |
| 59 | Short Truncated BSR |
| 60 | Long Truncated BSR |
| 61 | Short BSR |
| 62 | Long BSR |
| 63 | Padding |

### Values of two-octet eLCID for UL-SCH

| **Codepoint** | **Index** | **LCID values** |
|---|---|---|
| 0 to (2¹⁶ - 1) | 320 to (2¹⁶ + 319) | Identity of the logical channel |

### Values of one-octet eLCID for UL-SCH

| **Codepoint** | **Index** | **LCID values** |
|---|---|---|
| 0 to 249 | 64 to 313 | Reserved |
| 250 | 314 | BFR (four octets Cᵢ) |
| 251 | 315 | Truncated BFR (four octets Cᵢ) |
| 252 | 316 | Multiple Entry Configured Grant Confirmation |
| 253 | 317 | Sidelink Configured Grant Confirmation |
| 254 | 318 | Desired Guard Symbols |
| 255 | 319 | Pre-emptive BSR |

As described in FIG. 1I, in the next generation mobile communication system (long term evolution (LTE) system or new radio (NR) system), the data protection procedure (ciphering or integrity protection) or the data protection release procedure (deciphering or integrity verification) is not applied to PDCP control data (PDCP control PDU), RLC control data (RLC control PDU), MAC control information (MAC control element (MAC CE)), RLC header, or MAC subheader, thereby being exposed to security threats.

Also, looking at the protocol structure described in FIG. 1I, it can be seen that the PDCP control data (PDCP control PDU), RLC control data (RLC control PDU), MAC control information (MAC CE), RLC header, or MAC subheader, exposed to the security threats, ultimately requires all data processing to be performed through the MAC layer device. In other words, the layer device most suitable for performing the data protection procedure or the data protection release procedure on the PDCP control data (PDCP control PDU), RLC control data (RLC control PDU), MAC control information (MAC CE), RLC header, or MAC subheader may be the MAC layer device.

Therefore, the disclosure proposes a method for performing the data protection procedure in the MAC layer device. More specifically, the disclosure proposes performing the data protection procedure (e.g., the ciphering procedure or the integrity protection procedure) or the data protection release procedure (e.g., the deciphering procedure or the integrity verification procedure) on data exposed to security threats in the MAC layer device.

According to an embodiment of the disclosure, when performing the data protection procedure or the data protection release procedure in the MAC layer device, it is proposed to construct different data structures for downlink data and uplink data, respectively. In addition, the respective data structures are described and proposed as data structures suitable for the implementation of the UE or the implementation of the base station.

In addition, the disclosure is characterized by applying the data protection procedure to the LTM MAC CE in the handover procedure indicated by LTM MAC CE, i.e., L1/L2-based mobility as described above in FIG. 1E, and illustrates related data structures and procedures. That is, among the above-described PDCP control data (PDCP control PDU), RLC control data (RLC control PDU), MAC control information (MAC CE), RLC header, and MAC subheaders exposed to the security threats, it only deals with applying the data protection procedure to the MAC control information (MAC CE) or MAC subheader. This is because, compared to other types of data PDUs, the MAC control information (MAC CE) or MAC subheader, especially transmission of LTM-related MAC CE, indicates a handover.

That is, the handover performance of the UE is affected by the transmission of an incorrect MAC CE from a fake base station (gNB), which significantly affects the overall performance by affecting the UE's connection state change and the service continuity. Other data PDUs and other types of MAC CEs (e.g., change in channel state information (CSI) resources, activation/deactivation of SCell) are operations that occur while the UE maintains the connection to the current serving cell, and are not operations that change the connection itself with the current PCell. From this perspective, a new technique for applying the data protection procedure to the LTM MAC CE is essential for smooth data communication between the UE and the base station, and a new security technique in the MAC layer should be applied.

According to an embodiment of the disclosure, a method for applying the data protection procedure and the data protection release procedure to downlink data, particularly the MAC PDU including the LTM MAC CE, and a data structure suitable for UE implementation and base station implementation are proposed as follows.
- First data protection method: A method of applying the data protection procedure or the data protection release procedure to the entire MAC PDU for downlink data, and a data structure suitable for UE implementation or base station implementation.
- Second data protection method: A method of applying the data protection procedure or the data protection release procedure to MAC SDU or MAC subPDU (e.g., MAC subheader and MAC SDU) corresponding to MAC control information (MAC CE) for downlink data, and a data structure suitable for UE implementation or base station implementation.
- Third data protection method: A method of applying the data protection procedure or the data protection release procedure to MAC SDU or MAC subPDU (e.g., MAC subheader and MAC SDU) corresponding to LTM MAC control information (L1/L2 triggered mobility MAC CE) for downlink data, and a data structure suitable for UE implementation or base station implementation.

Although an embodiment of the disclosure proposes a method for applying different data protection procedures or data protection release procedures to downlink data including LTM MAC CE in the MAC layer device, it can also be applied to uplink data including other uplink MAC CE. For example, the data protection procedure or data protection release procedure can be applied to LTM completion confirmation MAC CE, which is used by the UE to notify the source base station that L1/L2-based handover is completed, due to the introduction of LTM MAC CE. In this case, the location of MAC CE in the structure of uplink and downlink MAC PDUs may be different, but the remaining structure can be applied as is.

For example, if the data to which the MAC layer device intends to apply the data protection procedure or the data protection release procedure is downlink data including LTM MAC CE (e.g., data received by the UE or data transmitted by the base station), the first data protection method, the second data protection method, or the third data protection method can be applied. If the data to which the MAC layer device intends to apply the data protection procedure or the data protection release procedure is uplink data (e.g., data transmitted by the UE or data received by the base station), the first data protection method, the second data protection method, or the third data protection method can be applied. In other words, different data protection methods may be applied to different links.

Additionally, in the disclosure, the integrity protection procedure (or integrity verification procedure) or the ciphering procedure (or deciphering procedure) performed in the MAC layer device may apply different methods among the above-proposed methods. For example, when applying the data protection method to uplink data, the first data protection method may be applied to the integrity protection procedure, and the third data protection method may be applied to the ciphering procedure. Similarly, for example, when applying the data protection method to downlink data, the first data protection method may be applied to the integrity protection procedure, and the third data protection method may be applied to the ciphering procedure.

FIGS. 1JA, 1JB, and 1JC are diagrams illustrating a data protection method in relation to downlink data including L1/L2 triggered mobility (LTM) media access control (MAC) control element (CE) according to an embodiment of the disclosure.

FIGS. 1JA, 1JB, and 1JC are diagrams illustrating a method for enhancing security for data or header exposed to a security threat.

The data or header exposed to the security threat may include at least one or more of PDCP control data (PDCP control PDU), RLC control data (RLC control PDU), MAC control information (MAC CE), RLC header, or MAC subheaders exposed to the security threat as described above.

According to an embodiment of the disclosure, in order to enhance security for the data exposed to the security threat, it is proposed to perform the data protection procedure or the data protection release procedure in the MAC layer device. Specifically, a method for applying the data protection procedure or the data protection release procedure to an entire MAC protocol data unit (PDU) for downlink data and a data structure suitable for UE implementation or base station implementation are proposed.

In the drawing, 1j-10 shows a method of constructing the MAC PDU.

The MAC layer device may generate a MAC subPDU as follows.

The MAC layer device may generate MAC subheaders based on different MAC SDUs and concatenate them to generate respective MAC subPDUs. Or, if necessary (for example, depending on a generation condition of MAC control information), the MAC layer device may construct MAC control information, generate MAC subheaders, and concatenate them to generate MAC subPDUs.

Or, the MAC subPDU may be composed of a MAC subheader for padding or a padding and a MAC subheader (hereinafter, the term "padding-related MAC subPDU" may be used interchangeably).

The MAC layer device may construct the MAC PDU with at least one or more MAC subPDUs and deliver the MAC PDU to a lower layer. The MAC PDU may refer to a data unit composed of at least one or more MAC subPDUs.

The case of constructing downlink data described below may include a case where the base station transmits data to the UE, and the case of constructing uplink data may include a case where the UE transmits data to the base station.

When the MAC layer device constructs downlink data based on the MAC subPDU, the MAC PDU may be constructed as follows. When the MAC PDU includes at least one piece of MAC control information, the at least one piece of MAC control information may be positioned at the very front of the MAC PDU. When the MAC PDU includes at least one MAC SDU, the at least one MAC SDU may be positioned after the MAC control information. When padding is required, the padding-related MAC subPDU may be positioned at the very end of the MAC PDU. In the MAC subPDU, the MAC subheader may always be positioned before the MAC SDU, the MAC control information, or the padding. The MAC layer device may construct the MAC PDU with the MAC subPDUs according to the above-described method and deliver it to a lower layer device for transmission.

As described above, in the case of downlink data, important control information such as MAC control information is positioned at the very front of the MAC PDU, which has the advantage that the UE can quickly process the control information.

On the other hand, in the case of uplink data, the MAC subPDU including the MAC control information may be positioned at the very end of the MAC PDU. The reason for positioning the MAC subPDU including the MAC control information at the very end of the MAC PDU is that MAC subPDUs related to data that can be generated in advance are generated in an appropriate size, and then MAC subPDUs including MAC control information are sequentially attached to the back according to generation to construct the MAC PDU and then delivered (or transmitted) to a lower layer, thereby enabling fast delivery (or transmission).

In the drawing, 1j-15 shows a case where the data protection procedure is configured in the MAC layer device. The data protection procedure may include at least one of the ciphering procedure or the integrity protection procedure. A procedure in the case where the data protection procedure is configured in the MAC layer device may be as follows.

When data protection is configured in the MAC layer device, specifically, when the integrity protection procedure is configured in the MAC layer device, the procedure may be as follows. The MAC layer device may apply the integrity protection procedure to the entire MAC PDU 1j-16. A first field may be generated as a result of the integrity protection procedure, and the first field may be positioned at the very front of the MAC PDU. The first field may include a Layer2 Message Authentication Code-Integrity (MAC-I) field.

The MAC layer device may generate a MAC subPDU including the first field, and position the MAC subPDU including the first field at the very front of the MAC PDU. Specifically, the MAC layer device may assign or define a logical channel identifier separately so that a receiving MAC layer device can distinguish the first field. The MAC layer device may consider the first field as a MAC SDU, generate a MAC subheader including the logical channel identifier indicating the first field, attach the generated MAC subheader to the front of the first field to construct the MAC subPDU, and then position the MAC subPDU at the very front of the MAC PDU.

According to another embodiment of the disclosure, when the integrity protection procedure is configured in the MAC layer device, the device may always attach only the first field of a constant size to the very front of the MAC PDU while performing the above-described procedure without assigning or defining the logical channel identifier for the first field and without constructing the MAC subheader, so that the receiver can read the first field of the constant size from the very front. By doing so, the overhead equivalent to the size of the MAC subheader may be reduced.

If the ciphering procedure is configured in the MAC layer device, the ciphering procedure may be performed on the entire MAC PDU (or the integrity-protected MAC PDU or the first field in the case where the integrity protection procedure is configured). Then, the ciphered data (MAC PDU or the first field) may be transmitted to a lower layer device.

In the drawing, 1j-20 shows another embodiment when the data protection procedure is configured in the MAC layer procedure. The data protection procedure may include at least one of the ciphering procedure or the integrity protection procedure.

When the data protection procedure is configured in the MAC layer device, specifically, when the integrity protection procedure is configured, a procedure of the MAC layer device may be as follows.

The integrity protection procedure may be applied to the entire MAC PDU 1j-22. A first field may be generated as a result of the integrity protection procedure, and the first field may be positioned at the very front of the MAC PDU. The first field may include a Layer2 Message Authentication Code-Integrity (MAC-I) field. If the MAC PDU contains padding or a MAC subheader 1j-23 corresponding to the padding, the integrity protection procedure may not be applied to the padding (or MAC SDU) or the MAC subheader corresponding to the padding to reduce processing complexity.

The MAC layer device may generate a MAC subPDU including the first field, and position the MAC subPDU including the first field at the very front of the MAC PDU. Specifically, the MAC layer device may assign or define a logical channel identifier separately so that a receiving MAC layer device can distinguish the first field, consider the first field as a MAC SDU 1j-21, generate the MAC subheader 1j-21 including the logical channel identifier indicating the first field, attach the MAC subheader to the front of the first field to construct the MAC subPDU, and then position it at the very front of the MAC PDU.

According to another embodiment of the disclosure, when the integrity protection procedure is configured in the MAC layer device, the device may always attach only the first field 1j-24 of a constant size to the very front of the MAC PDU while performing the above-described procedure without assigning or defining the logical channel identifier for the first field and without constructing the MAC subheader, so that the receiver can read the first field of the constant size from the very front. By doing so, the overhead equivalent to the size of the MAC subheader may be reduced.

If the ciphering procedure is configured in the MAC layer device, the ciphering procedure may be performed on the entire MAC PDU (or the integrity-protected MAC PDU or the first field in the case where the integrity protection procedure is configured). Then, the ciphered data (MAC PDU or the first field) may be transmitted to a lower layer device.

According to yet another embodiment of the disclosure, when the entire MAC PDU contains padding or a subheader corresponding to padding, the processing complexity can be reduced by not performing the ciphering procedure for the padding or the subheader corresponding to the padding.

Still another embodiment in which the data protection procedure is configured in the MAC layer procedure may be as follows. The data protection procedure may include at least one of the ciphering procedure or the integrity protection procedure.

When the data protection procedure is configured in the MAC layer device, specifically, when the integrity protection procedure is configured in the MAC layer device, a procedure may be as follows.

The integrity protection procedure may be applied to the entire MAC PDU. A first field may be generated as a result of the integrity protection procedure, and the first field may be positioned at the very end of the MAC PDU. The first field may include a Layer2 Message Authentication Code-Integrity (MAC-I) field.

The MAC layer device may generate a MAC subPDU including the first field, and position the MAC subPDU including the first field at the very end of the MAC PDU.

More specifically, the MAC layer device may assign or define a logical channel identifier separately so that a receiving MAC layer device can distinguish the first field, consider the first field as a MAC SDU, generate the MAC subheader including the logical channel identifier indicating the first field, attach the MAC subheader to front of the first field to construct the MAC subPDU, and then position it at the very end of the MAC PDU.

According to another embodiment of the disclosure, when the integrity protection procedure is configured in the MAC layer device, the device may always attach only the first field of a constant size to the very end of the MAC PDU while performing the above-described procedure without assigning or defining the logical channel identifier for the first field and without constructing the MAC subheader, so that the receiver can read the first field of the constant size from the very front. By doing so, the overhead equivalent to the size of the MAC subheader may be reduced.

If the MAC PDU includes padding or a header for padding, the first field attached to the very end of the MAC PDU cannot be distinguished by the receiving MAC layer device because the L field (length field) is not included in the MAC subheader for the padding. In other words, since the size of the padding is unknown, the first field attached to the end of the padding cannot be distinguished. Therefore, in the case where the data protection procedure is configured in the MAC layer device as described above, if the MAC PDU includes padding, a length field or a new field may be introduced to transmit information indicating the location of the first field. For example, the indication information may be included in the MAC subheader (e.g., the MAC subheader for padding).

If the ciphering procedure is configured in the MAC layer device, the ciphering procedure may be performed on the entire MAC PDU (or the integrity-protected MAC PDU or the first field if the integrity protection procedure is configured). Then the ciphered data (MAC PDU or the first field) may be transmitted to a lower layer device.

For example, in the case where the MAC PDU includes padding or a header for padding so that the receiver can apply directly the deciphering procedure to the received entire data to maximize the convenience of implementation, the ciphering procedure may be performed by also including the padding or the header for padding.

Alternatively, in the case where the entire MAC PDU includes padding or a subheader corresponding to padding, the ciphering procedure may not be performed for the padding or the subheader corresponding to padding to reduce processing complexity.

In the drawing, 1j-30 shows another embodiment when the data protection procedure is configured in the MAC layer procedure. The data protection procedure may include at least one of the ciphering procedure or the integrity protection procedure.

If the data protection procedure is configured in a layer device, specifically, if the integrity protection procedure is configured in the MAC layer device, a procedure may be as follows.

The MAC layer device may apply the integrity protection procedure to the entire MAC PDU 1j-33. A first field may be generated as a result of the integrity protection procedure and positioned at the very end of the MAC PDU. The first field may include a Layer2 Message Authentication Code-Integrity (MAC-I) field.

In the above, if the MAC PDU includes padding or a MAC subheader 1j-32 corresponding to the padding, the integrity protection procedure may not be applied to the padding (or MAC SDU) or the MAC subheader corresponding to the padding to reduce processing complexity, and the first field may be positioned before the padding or the MAC subheader 1j-32 corresponding to the padding. This is because, when the MAC PDU includes padding or a header for padding, the L field (length field) is not included in the MAC subheader for padding, so the first field attached to the very end of the MAC PDU cannot be distinguished by the receiving MAC layer device. That is, since the size of the padding is unknown, the first field attached to the end of the padding cannot be distinguished, so it should be positioned before the padding.

The MAC layer device may generate a MAC subPDU including the first field, and position the MAC subPDU including the first field at the very end of the MAC PDU.

More specifically, the MAC layer device may assign or define a logical channel identifier separately so that the receiving MAC layer device can distinguish the first field, consider the first field as a MAC SDU 1j-31, generate the MAC subheader 1j-31 including the logical channel identifier indicating the first field, attach the MAC subheader to front of the first field to construct the MAC subPDU, and then position it at the very end 1j-31 of the MAC PDU.

According to another embodiment of the disclosure, when the integrity protection procedure is configured in the MAC layer device, the device may always attach only the first field 1j-34 of a constant size to the very end 1j-34 of the MAC PDU while performing the above-described procedure without assigning or defining the logical channel identifier for the first field and without constructing the MAC subheader, so that the receiver can read the first field of the constant size from the very front. By doing so, the overhead equivalent to the size of the MAC subheader may be reduced.

If the MAC PDU includes padding or a MAC subheader corresponding to padding, the integrity protection procedure may not be applied to the padding (or MAC SDU) or the MAC subheader corresponding to padding to reduce the processing complexity, and the first field may be positioned in front 1j-34 of the padding or the MAC subheader corresponding to padding.

If the ciphering procedure is configured in the MAC layer device, the ciphering procedure may be performed on the entire MAC PDU (or the integrity-protected MAC PDU or the first field if the integrity protection procedure is configured). Then the ciphered data (MAC PDU or the first field) may be delivered to a lower layer device (or transmission may be performed).

For example, in the case where the MAC PDU includes padding or a header for padding so that the receiver can apply directly the deciphering procedure to the received entire data to maximize the convenience of implementation, the ciphering procedure may be performed by also including the padding or the header for padding.

Alternatively, in the case where the entire MAC PDU includes padding or a subheader corresponding to padding, the ciphering procedure may not be performed for the padding or the subheader corresponding to padding to reduce processing complexity.

If the MAC layer device receives data (e.g., MAC PDU) to which the first data protection method for uplink data proposed above in FIGS. 1JA, 1JB, and 1JC is applied, and if the ciphering procedure or the deciphering procedure is configured in the MAC layer device (by configuring it via RRC configuration or activating/deactivating the corresponding function via other L1/L2 signaling), the receiving MAC layer device may apply the deciphering procedure to the received entire MAC PDU or a data part of the MAC PDU to which ciphering is applied.

In addition, if the integrity protection procedure or the integrity verification procedure is configured in the MAC layer device, the device may check the integrity by identifying or reading the first field (Layer2 MAC-I field) contained in the MAC PDU (for example, identifying the logical identifier of the MAC subheader and identifying the first field, or identifying the first field at a specific location (the very front or the very end of the MAC PDU)), and applying the integrity verification procedure to the entire MAC PDU or the data part to which integrity protection is applied. If the integrity verification fails, the MAC PDU may be discarded.

FIGS. 1KA, 1KB, and 1KC are diagrams illustrating a data protection method in relation to downlink data including LTM MAC CE according to another embodiment of the disclosure.

FIGS. 1KA, 1KB, and 1KC illustrate a method proposed in the disclosure to enhance security for MAC control information (MAC control element (CE)) or MAC subheaders exposed to security threats. Specifically, it is proposed to perform the data protection procedure or the data protection release procedure in the MAC layer device for MAC control information or MAC subheaders exposed to security threats.

More specifically, proposed are a method for applying the data protection procedure or the data protection release procedure to MAC SDU or MAC subPDU (e.g., MAC subheader and MAC SDU) corresponding to MAC control information (MAC CE) for downlink data and a data structure suitable for UE implementation or base station implementation.

In 1k-10, the MAC layer device may generate a MAC subPDU as follows. The MAC layer device may generate MAC subheaders based on different MAC SDUs and concatenate them to generate respective MAC subPDUs. Or, if necessary (for example, depending on a generation condition of MAC control information), the MAC layer device may construct MAC control information, generate MAC subheaders, and concatenate them to generate MAC subPDUs. The MAC subPDU may also be composed of a MAC subheader for padding or a padding and a MAC subheader.

The MAC layer device may construct the MAC PDU with at least one or more MAC subPDUs and deliver the MAC PDU to a lower layer. The MAC PDU may refer to a data unit composed of a plurality of MAC subPDUs.

When the MAC layer device constructs downlink data based on the generated MAC subPDU (for example, when the base station transmits data to the UE), the MAC PDU may be constructed as follows. If padding is required, it may be positioned at the very end of the MAC PDU composed of MAC subPDUs. When at least one piece of MAC control information is included, it may be positioned at the very front of the MAC PDU. When MAC SDUs are included, the MAC SDUs may be positioned after the MAC control information. In addition, the MAC subheader in the MAC subPDU may always be positioned before the MAC SDU, the MAC control information, or the padding, and the MAC PDU may be composed of the MAC subPDUs as described above and delivered to a lower layer device for transmission. In the case of downlink data, there is an advantage in that important control information, such as MAC control information, can be positioned at the very front so that the UE can quickly process the control information first.

In 1k-20, if the data protection procedure (ciphering procedure or integrity protection procedure) is configured in the MAC layer device, the MAC layer device may apply the integrity protection procedure to data (e.g., MAC control information (MAC CE) or MAC subheader or data type configured via radio resource control (RRC) or MAC SDU or MAC subPDU) 1k-21 to which the integrity protection procedure should be applied, generate a first field (e.g., Layer2 Message Authentication Code-Integrity (MAC-I) field) as a result of the integrity protection procedure, and position it after 1k-22 or before the data (MAC CE or MAC subheader or MAC SDU or MAC subPDU).

More specifically, among the MAC subPDUs included in the MAC PDU (e.g., data including MAC CE), the integrity protection procedure may be selectively applied only to specific MAC subPDUs 1k-21 (e.g., specific data including specific MAC CE).

Considering that the size of the MAC PDU transmitted in the next-generation mobile communication system can be up to 150,000 bytes, if the data protection procedure is selectively applied only to data exposed to security threats, the data protection procedure only needs to be applied to about a thousand bytes. Therefore, the processing complexity can be reduced, and the data processing speed can be increased.

If the MAC PDU includes padding or a MAC subheader 1k-23 corresponding to the padding, the processing complexity can be reduced by not applying the integrity protection procedure to the padding (or MAC SDU) or the MAC subheader corresponding to the padding.

The MAC layer device may assign or define a logical channel identifier separately so that a receiving MAC layer device can distinguish the first field, consider the first field as MAC SDU 1k-22, generate the MAC subheader including the logical channel identifier indicating the first field, attach the MAC subheader to front of the first field to construct the MAC subPDU, and then positioned it after 1k-22 or before the data (data to which integrity protection is applied, MAC CE, MAC SDU, or MAC subPDU).

According to another embodiment of the disclosure, when the integrity protection procedure is configured in the MAC layer device, the device may always attach only the first field 1k-22 of a constant size to the end 1k-22 or front of the data (the MAC CE, MAC SDU, or MAC subPDU to which the integrity protection is applied) while performing the above-described procedure without assigning or defining the logical channel identifier for the first field and without constructing the MAC subheader, and define a new second field in the MAC subheader of the data to indicate whether the integrity protection procedure is applied (or whether the data protection procedure is applied) and to indicate that the first field is present before or after the data (alternatively, even if the second field is not defined, when the data protection procedure is promised, defined, or configured to be applied for a specific MAC CE (for example, the LTM MAC CE considered in the disclosure or one or more MAC CEs among the MAC CEs listed in the disclosure), the UE or the base station may know that the first field for the MAC CE may be located before or after the MAC subPDU containing the MAC CE), so that the receiver can read the first field of the constant size before or after each integrity-protected data. By doing so, the overhead equivalent to the MAC subheader size may be reduced.

As described above, if the first field is positioned after the MAC CE or MAC subPDU, it can have a structure suitable for implementing parallel processing because it is possible to position the first field value calculated later while reading each MAC subPDU and applying the data protection procedure. Meanwhile, if the first field is positioned at the very front of the MAC subheader or MAC subPDU, there is an advantage that the receiving MAC layer device can read the first field first.

According to another embodiment of the disclosure, since a plurality of pieces of MAC control information are positioned at the very front of the MAC PDU as in 1k-40 or 1k-50 for downlink data when the procedure proposed above is performed, the integrity protection procedure may be applied as a group to the plurality of pieces of MAC control information or a plurality of pieces of MAC control information to which the integrity protection procedure should be applied, and the first field may be positioned after of the very last MAC control information among the plurality of pieces of MAC control information.

According to another embodiment of the disclosure, the first field may be positioned before the very front MAC control information among the plurality of pieces of MAC control information. By applying the integrity protection procedure to multiple pieces of MAC control information at once, the implementation complexity can be reduced, the number of first fields can be reduced, and the overhead can be reduced.

If the ciphering procedure is configured in the MAC layer device, the ciphering procedure may be performed on data to which the ciphering procedure should be applied (e.g., MAC control information (MAC CE) or MAC subheader or data type configured via RRC or MAC SDU or MAC subPDU) (or, when the integrity protection procedure is configured, on the integrity-protected MAC CE or the first field). Then, data (MAC PDU) including data to which the integrity protection or ciphering procedure is applied may be delivered to a lower layer device (or transmission may be performed).

According to another embodiment of the disclosure, when the MAC PDU includes padding or a subheader corresponding to padding, the ciphering procedure may not be performed for the padding or the subheader corresponding to padding to reduce processing complexity.

According to another embodiment of the disclosure, since a plurality of pieces of MAC control information are positioned at the very front of the MAC PDU as in 1k-40 or 1k-50 for downlink data when the procedure proposed above is performed, the ciphering procedure may be applied as a group to the plurality of pieces of MAC control information or a plurality of pieces of MAC control information to which the ciphering procedure should be applied. By applying the ciphering procedure to the plurality of pieces of MAC control information at once, the implementation complexity can be reduced.

As described above, when applying the second data protection method proposed in the disclosure to the MAC layer device, the integrity protection procedure may be applied to data to which the integrity protection procedure should be applied (e.g., MAC control information (MAC CE), MAC subheader, or data type (e.g., MAC CE type) configured via RRC). That is, by applying the integrity protection procedure or the integrity verification procedure to MAC subPDU units 1k-20, 1k-21, 1k-40, and 1k-41, security can be enhanced.

According to another embodiment of the disclosure, when applying the second data protection method proposed above to the MAC layer device, the integrity protection procedure may be applied to data to which the integrity protection procedure should be applied (e.g., MAC control information (MAC CE), MAC subheader, or data type (e.g., MAC CE type) configured via RRC). That is, by applying the integrity protection procedure or the integrity verification procedure to MAC SDU units 1k-30, 1k-31, 1k-50, and 1k-51 excluding the MAC subheader, the implementation complexity can be reduced (or lowered).

When applying the second data protection method proposed in the disclosure to the MAC layer device, the ciphering procedure may be applied to data to which the ciphering procedure should be applied (e.g., MAC control information (MAC CE), MAC subheader, or data type (e.g., MAC CE type) configured via RRC). That is, by applying the ciphering procedure or the deciphering procedure to MAC subPDU units 1k-21, 1k-21, 1k-40, and 1k-41, security can be enhanced.

According to another embodiment of the disclosure, when applying the second data protection method proposed above to the MAC layer device, the ciphering procedure may be applied to data to which the ciphering procedure should be applied (e.g., MAC control information (MAC CE), MAC subheader, or data type (e.g., MAC CE type) configured via RRC). That is, by applying the ciphering procedure or the deciphering procedure to MAC SDU units 1k-30, 1k-31, 1k-50, and 1k-51 excluding the MAC subheader, the implementation complexity can be reduced (or lowered).

In the above description, the data to which the data protection procedure should be applied (e.g., MAC control information (MAC CE), MAC subheader, or data type (e.g., MAC CE type) configured via RRC) may be defined or promised as specific data (MAC CE) between the UE and the base station, or may be configured via an RRC message as in FIG. 1D.

More specifically, the data protection procedure or the data protection release procedure may be applied only to specific MAC CEs (or MAC SDUs) or MAC subPDUs corresponding to specific MAC CEs from among the MAC control information (MAC CE), MAC subheader, or data type (e.g., MAC CE type) configured via RRC.

According to another embodiment of the disclosure, when applying the data protection procedure only to specific MAC CEs (e.g., LTM MAC control information (MAC CE) or one or more MAC CEs among the MAC CEs listed in the disclosure) among the MAC CEs included in downlink data, the MAC CEs to which the data protection procedure is applied may be positioned after the MAC CEs to which the data protection procedure is not applied.

By allowing the receiver to first read MAC CEs to which the data protection release procedure is not applied, data processing can be expedited and MAC control information can be read quickly. This is because MAC CEs to which the data protection release procedure is applied can be read only after the data protection release procedure is completed.

The data to which the data protection procedure should be applied can be distinguished between the UE and the base station based on the field information of the MAC header (e.g., D/C field (data/control) or logical channel identifier).

If the receiving MAC layer device receives data (e.g., MAC PDU) to which the second data protection method for downlink data proposed in the above-mentioned FIG. 1K is applied, and if the ciphering procedure or the deciphering procedure is configured in the MAC layer device, the receiving MAC layer device may apply the deciphering procedure to a data part to which ciphering is applied in the received MAC PDU.

In addition, if the integrity protection procedure or the integrity verification procedure is configured in the MAC layer device, the device may check the integrity by identifying or reading the first field (Layer2 MAC-I field) contained in the MAC PDU (for example, identifying the logical identifier of the MAC subheader and identifying the first field, or identifying the first field at a specific location (the very front or the very end of the MAC subPDU)), and applying the integrity verification procedure to the data part to which integrity protection is applied in the MAC PDU. If the integrity verification fails, the MAC subPDU may be discarded.

FIGS. 1LA and 1LB are diagrams illustrating a data protection method in relation to downlink data including LTM MAC CE according to yet another embodiment of the disclosure.

FIGS. 1LA and 1LB describe the data protection procedure or the data protection release procedure in the MAC layer device to enhance security for specific MAC control information (MAC CE) or MAC subheaders exposed to security threats, proposed in the disclosure. That is, proposed are a method for applying the data protection procedure or the data protection release procedure to MAC SDU or MAC subPDU (e.g., MAC subheader and MAC SDU) corresponding to LTM MAC control information (L 1/L2 triggered mobility MAC CE) for downlink data and a data structure suitable for UE implementation or base station implementation.

More specifically, according to an embodiment of the disclosure, the data structure may be a data structure in which the MAC-I field is included in LTM MAC CE. This method is characterized in that it is used when the data protection procedure (ciphering procedure or integrity protection procedure) is configured or determined to be applied only to the LTM MAC CE, and is not applied to other MAC CEs.

According to an embodiment of the disclosure, as shown in 11-10, the MAC layer device may generate MAC subheaders based on different MAC SDUs and concatenate them to generate respective MAC subPDUs. In addition, if necessary (for example, depending on a generation condition of MAC control information), the MAC layer device may construct MAC control information, generate MAC subheaders, and concatenate them to generate MAC subPDUs. The MAC subPDU may also be composed of a MAC subheader for padding or a padding and a MAC subheader.

When the MAC layer device constructs MAC PDU (a data unit composed of multiple MAC subPDUs), if padding is required in the case of constructing downlink data based on the MAC subPDU generated above (for example, when the base station transmits data to the UE), it may be positioned at the very end of the MAC PDU composed of MAC subPDUs, and if MAC control information or MAC control information is included, it may be positioned at the very front of the MAC PDU, and MAC SDUs may be positioned after the MAC control information.

In addition, in the MAC subPDU, the MAC subheader may always be positioned at the front of the MAC SDU or MAC control information or padding, and the MAC PDU may be composed of the MAC subPDUs as described above and delivered to a lower layer device for transmission. As described above, in the case of downlink data, there is an advantage in that important control information such as MAC control information may be positioned at the very front so that the UE can quickly process the control information first.

According to an embodiment of the disclosure, if the data protection procedure (ciphering procedure or integrity protection procedure) is configured in the MAC layer device, particularly for LTM MAC CE, as shown in 11-20, the MAC layer device may apply the integrity protection procedure to data 11-22 (e.g., a part 11-41 of LTM MAC control information (MAC CE) or a MAC subheader or a data type configured via RRC or a MAC SDU or MAC subPDU) to which the integrity protection procedure should be applied, generate a first field (e.g., a Layer2 Message Authentication Code-Integrity (MAC-I) field) as a result of the integrity protection procedure, and attach it to the data to generate the LTM MAC CE 11-40.

If the MAC PDU includes padding or a MAC subheader 11-23 corresponding to the padding, the processing complexity can be reduced by not applying the integrity protection procedure to the padding (or MAC SDU) or the MAC subheader corresponding to the padding.

When generating the LTM MAC CE so that the receiving MAC layer device can distinguish the first field, the MAC layer device may generate the LTM MAC CE by including the corresponding field in a specific position (for example, the very end) of the MAC CE. That is, when the data protection procedure (ciphering procedure or integrity protection procedure) for the LTM MAC CE is configured through radio resource control (RRC) configuration, the device may generate a logical channel identifier for the LTM MAC CE, generate a first field 11-42, attach the first field to the back of the remaining fields 11-41 of the LTM MAC CE to construct the LTM MAC CE, and then position it behind 11-42 the data (data to which integrity protection is applied, 11-41).

The following parameters may be included as content corresponding to other fields 11-41 of the LTM MAC CE.
- Configuration identifier for candidate cells to which LTM is applied
- Uplink/downlink BWP ID to be operated after handover to the corresponding cell
- Layer 2 initialization indicator (e.g., MAC reset)
- Timing Advance related information (cell-to-cell synchronization information)
- Whether random access is indicated and related content
   **▪** CFRA (Contention free random access) related resource information
   **▪** 2-step RACH application indicator
- Beam information used after handover to the corresponding cell (such as transmission configuration indication (TCI) state)
- Indicator indicating whether Layer 2 MAC-I is included in LTM MAC CE (or it may be replaced through RRC configuration)

If the ciphering procedure is configured in the MAC layer device, the ciphering procedure may be performed on data (LTM MAC control information (MAC CE) or MAC subheader or data type configured via RRC or MAC SDU or MAC subPDU) to which the ciphering procedure should be applied (or integrity-protected LTM MAC CE if the integrity protection procedure is configured).

Then the data (MAC PDU) including data to which the integrity protection or the ciphering procedure is applied may be delivered to a lower layer device (or transmission may be performed).

According to another embodiment of the disclosure, if the MAC PDU includes padding or a subheader corresponding to padding, the ciphering procedure may not be performed on the padding or the subheader corresponding to padding, thereby reducing processing complexity.

According to another embodiment of the disclosure, when performing the procedure proposed above, since MAC control information is positioned at the very front of the MAC PDU for downlink data as in 11-20 or 11-30, an independent ciphering procedure may be applied to the LTM MAC control information.

When applying the third data protection method proposed above in the MAC layer device, the integrity protection procedure may be applied to data (LTM MAC control information (MAC CE) or MAC subheader) to which the integrity protection procedure should be applied, that is, the integrity protection procedure or the integrity verification procedure may be applied to MAC subPDU units 11-22, thereby enhancing security.

According to another embodiment of the disclosure, when applying the third data protection method proposed above in the MAC layer device, the integrity protection procedure may be applied to data (LTM MAC control information (MAC CE)) to which the integrity protection procedure should be applied. That is, the integrity protection procedure or the integrity verification procedure may be applied to MAC SDU units 11-32 excluding the MAC subheader, thereby reducing implementation complexity. As illustrated in the drawing, the integrity protection for LTM MAC CE may also be applied (11-22) to the subheader of LTM MAC CE or not applied (11-32).

The operation when the data protection procedure is applied to the LTM MAC CE subheader may be as follows.

### 1) Integrity protection and verification procedure

A. Perform the integrity protection procedure on LTM MAC CE content-related fields 11-41 and LTM MAC CE subheader, and attach the Layer2 MAC-I generated through this to the very end of LTM MAC CE to generate a MAC subPDU containing the LTM MAC CE
B. Identify the MAC subPDU containing the LTM MAC CE among the received MAC subPDUs through LCID, and perform verification through the MAC-I contained in the corresponding LTM MAC CE. Verification excluding the part containing the MAC-I among the entire MAC subPDU

### 2) Ciphering operation and deciphering operation

A. Perform the ciphering procedure for LTM MAC CE fields 11-40 and LTM MAC CE subheader, and deliver MAC PDU containing the ciphered MAC subPDU to a lower layer
B. Identify the MAC subPDU containing the LTM MAC CE among the received MAC subPDUs by a new field indicating it, etc. and perform deciphering for the corresponding MAC subPDU

The operation in the case where the data protection procedure is not applied to the LTM MAC CE subheader may be as follows.

### 1) Integrity protection and verification procedure

A. Perform the integrity protection procedure only for the LTM MAC CE content-related fields 11-41, and attach the Layer2 MAC-I generated through this to the very end of the LTM MAC CE to generate a MAC subPDU containing the LTM MAC CE
B. Identify the MAC subPDU containing the LTM MAC CE among the received MAC subPDUs through LCID, and perform verification through the MAC-I contained in the corresponding LTM MAC CE. Verification excluding the part containing the MAC-I among the entire MAC subPDU

### 2) Ciphering operation and deciphering operation

A. Perform the ciphering procedure for the LTM MAC CE fields 11-40, and deliver MAC PDU containing the ciphered MAC subPDU to a lower layer
B. Identify the MAC subPDU containing the LTM MAC CE among the received MAC subPDUs by LCID, and perform deciphering for the corresponding MAC subPDU

The above method for applying the MAC subheader to the integrity protection procedure and the ciphering procedure may be applied independently. For example, integrity protection may be applied to the MAC subheader, but ciphering may not be applied.

When applying the third data protection method proposed above in the MAC layer device, the ciphering procedure may be applied to data to which the ciphering procedure should be applied (e.g., MAC control information (MAC CE) or MAC subheader). That is, by applying the ciphering procedure or the deciphering procedure in MAC subPDU units 11-22, security can be enhanced.

According to another embodiment of the disclosure, when applying the second data protection method described above in the MAC layer device, the ciphering procedure may be applied to data to which the ciphering procedure should be applied (for example, MAC control information (MAC CE)). That is, by applying the ciphering procedure or the deciphering procedure in MAC SDU units 11-32 excluding the MAC subheader, the implementation complexity can be reduced (or lowered).

If the MAC layer device receives data (e.g., MAC PDU) to which the third data protection method for downlink data proposed above in FIGS. 1LA and 1LB is applied, and if the ciphering procedure or the deciphering procedure is configured in the MAC layer device, the receiving MAC layer device may apply the deciphering procedure to a data part to which ciphering is applied in the received MAC PDU.

This is applied when the LTM MAC CE can be known through the logical channel identifier (LCID) of the received MAC subheader, and when a data protection configuration is applied to the corresponding LTM MAC CE.

In addition, if the integrity protection procedure or the integrity verification procedure is configured in the MAC layer device, the device may check the integrity by identifying or reading the LCID for the LTM MAC CE contained in the MAC PDU (for example, identifying the logical identifier of the MAC subheader and identifying the first field existing in the corresponding MAC CE, or identifying the first field at a specific location (the very end of the MAC subPDU)), and applying the integrity verification procedure to the data part to which the integrity protection is applied in the MAC PDU. If the integrity verification fails, the MAC subPDU that failed can be discarded.

The MAC CE to which the data protection methods proposed above are applied or the MAC subPDU including the MAC CE can be used for constructing the MAC PDU by having a higher priority than other MAC CEs.

In addition, the integrity protection and ciphering operations for the data protection methods proposed above are operations conventionally performed only in the PDCP layer, and there are two possible methods for performing them in the MAC layer.
1) Capability extension in the MAC layer to allow the integrity protection and ciphering operations existing in PDCP to be performed in the MAC layer for some MAC subPDUs or MAC PDUs
2) Perform in PDCP the integrity protection and ciphering operations required in the MAC layer and then deliver them to the MAC layer through coordination or interaction between the PDCP and the MAC layer

FIG. 1M is a diagram illustrating input values required for a security algorithm when applying a data protection method according to an embodiment of the disclosure.

First, it is necessary to define which security key proposed in the disclosure generates Layer2 MAC-I.

According to an embodiment of the disclosure, it is proposed that the existing RRCint security key or a new MACint security key can be derived through the security key (gNB key) of the base station in terms of integrity. Or, both of the above options can be used. In the case of a ciphering key, the existing RRCenc security key or a new MACenc security key can be derived through the security key (gNB key) of the base station.

As in FIG. 1M, the data protection method may include a ciphering procedure or deciphering procedure 1m-05 or an integrity protection procedure or integrity verification procedure 1m-10.

FIG. 1M indicates input values of the existing ciphering/deciphering algorithm, such as COUNT, BEARER, DIRECTION, LENGTH, and KEY, and input values of the integrity protection/verification algorithm, such as COUNT, MESSAGE, DIRECTION, BEARER, and KEY, when applying each security algorithm (e.g., at least one of a ciphering algorithm, a deciphering algorithm, an integrity protection algorithm, or an integrity verification algorithm).

However, the data protection procedure applied in the disclosure may use at least one input value among the input value candidates listed below.

(Some of the following input values or some of new input values composed of a combination of the following input value candidates may be used.)
- Length value (LENGTH)
- Direction value (DIRECTION)
   **▪** Uplink or downlink
- Message (MESSAGE)
   **▪** In the case of the first data protection method, MAC PDU to which the first field is applied
   **▪** In the case of the second data protection method, MAC subPDUs to which the first field is applied
   **▪** In the case of the third data protection method, LTM MAC CE or MAC subPDU including it
- Bearer identifier value (BEARER)
   **▪** Method 1: Existing bearer identifier determined by DRB ID and LCID is used as is
   **▪** Method 2: Preconfigured or established bearer identifier is used (dedicated bearer identifier for LTM transmission)
- UE identifier value
   **▪** For example, 5G-S-TMSI or C-RNTI or newly defined LTM-dedicated UE identifier
- COUNT
   **▪** The existing COUNT value can be reused, but its function is changed for the purpose of LTM MAC CE protection
   **▪** When MAC is reset, the COUNT value is set to 0
   **▪** Alternatively, the COUNT value for Layer2 MAC-I generation can be signaled through RRC configuration (or can be used with a name other than COUNT)
- LCID
   **▪** Method 1: Preconfigured value for LTM MAC CE protection (or value configured via RRC signaling)
   **▪** Method 2: LCID value of LTM MAC CE
   **▪** Method 3: LCID value for new MAC CE including Layer2 MAC-I
- Beam-related configuration value
   **▪** SSB (synchronization signal block) related indicator or identifier or information
- SFN (System Frame Number) or time value indicating time slot or subframe or time symbol
   **▪** Method 1: Use SFN or LSB of SFN
      **◆** The UE uses the SFN X that received the MAC CE as an input value, includes the SFN Y value in the LTM MAC CE, and compares the two values to determine validity
      **◆** If the difference between X and Y is greater than the threshold, the UE determines that MAC-I has failed
   **▪** Method 2: A method that uses a combination of most significant bits (MSB) of the SFN and a value that increases by 1 additionally
      **◆** The UE uses the MSB X of the SFN that received the MAC CE as an input value
      **◆** In the case of having an input value increase function, define a new value and use it in combination with the MSB of the SFN. For example, in the case of hybrid automatic repeat and request (HARQ) retransmission, the MSB of the SFN is used as input for the first transmission, and a value increased by 1 is used for the MSB of the SFN for the retransmission. Or, a newly defined and increased value is added to the MSB of the SFN and used.

The input value information in the above may be reconfigured or updated by an RRC message (e.g., an RRCReconfiguration message) in FIGS. 1D and 1E.

Alternatively, the input value information may be updated periodically (e.g., when a timer value is configured and every time the timer expires) or for every data.

In addition, if the base station indicates a handover to the UE when applying the data protection methods proposed in the disclosure, the input value information or some of the input value information may be reconfigured or updated. This may be delivered via an RRC configuration from the target cell after a separate handover, or in the case of LTM, it may be delivered as included in configuration information for preconfigured candidate target cells.

For example, when an inter-CU handover is performed, the security configuration information needs to be updated to the UE because the PDCP layer device is changed. Accordingly, as described above, the security configuration information or input values may be reconfigured or updated via an RRC message (e.g., an RRCReconfiguration message) in FIGS. 1D and 1E.

In addition, when inter-DU handover or intra-CU handover is performed, the PDCP layer device does not change, but the RLC layer device or the MAC layer device may be changed. In this case, if the data protection procedure in the MAC layer device proposed in the disclosure is configured and applied, it is necessary to update the security configuration information or input values for security enhancement. Therefore, as described above, the security configuration information or input values may be reconfigured or updated via an RRC message (e.g., an RRCReconfiguration message) in FIGS. 1D and 1E. Alternatively, the CU base station may update or reconfigure the security configuration information or input values for the data protection procedure in the MAC layer device by sending an F1 interface or an RRC message or an F1 interfact application protocol (F1AP) message to the DU base station.

When the base station having a CU-DU split structure is implemented in a wireless backhaul network, the central unit (CU) may drive and manage the PDCP layer device and the application layer devices above it, and the distributed unit (DU) may drive and manage the RLC layer device, the MAC layer device, or the PHY layer device.

In the disclosure, when the Layer2 MAC-I operation fails, that is, when the Layer2 MAC-I does not match the received data, the following operation is proposed. For reference, conventionally, when the MAC-I in the PDCP fails, the corresponding data packet is judged to be unreliable and the corresponding data packet is discarded.
- The UE discards the MAC data part to which the first field of the disclosure is applied

**▪** In the case of the first data protection method, the MAC PDU to which the first field is applied is discarded
**▪** In the case of the second data protection method, the MAC subPDUs to which the first field is applied are discarded
**▪** In the case of the third data protection method, only the LTM MAC CE is discarded

In addition, the UE may report to the base station that the MAC-I operation for the LTM MAC CE has failed. The report may be included in a report message from the UE to the base station performed via the existing RRC message, or may be reported via a new MAC CE, etc.

Additionally, if the LTM MAC CE is lost, the base station may perform retransmission for the corresponding MAC CE. The case of the loss of the LTM MAC CE may include a case where the corresponding MAC CE is not received until the number of HARQ retransmissions is exceeded, or a case where the loss of the MAC CE is detected.

When the base station performs the MAC CE retransmission, the base station may transmit the previously transmitted LTM MAC CE as is. Or, considering the channel condition, the input value for MAC-I determination in the LTM MAC CE may be changed to match the current condition and transmitted. The input value for MAC-I determination in the LTM MAC CE may include at least one of TCI stae, SFM, and Preconfigured ID.

In the case of HARQ retransmission, some of the MAC-I input values among the contents of the previously transmitted LTM MAC CE may be changeable, but some may be unchangeable.

For example, it may be difficult to change the TCI state or ID, and it may also be difficult to use the SFN value as it is. This is because the SFN value changes for each HARQ retransmission. Therefore, according to an embodiment of the disclosure, at least one method among the MSB of the SFN or a combination of the SFN and a separate increasing input value may be used.

The data protection methods proposed in the disclosure may be configured (or reconfigured) to be activated, deactivated, stopped, or released when the MAC layer device is established, initialized, or reconfigured, and as in FIGS. 1D and 1E, the stop, deactivation, activation, or release of the data protection methods may be configured (or indicated) via an RRC message.

Alternatively, the stop, deactivation, activation, or release of the data protection methods may be dynamically configured (or indicated) by newly defining control data (e.g., RLC control PDU, PDCP control PDU, or MAC CE) and transmitting the control data including an indicator.

When the data protection methods proposed in the disclosure are applied in the MAC layer device, the base station may process the MAC SDU including the first field (Layer2 MAC-I field) proposed in the disclosure with the highest priority in the MAC layer device. This is because the data indicating the handover should be configured with a higher priority than other data PDUs, and it may have the same or higher priority as the transmission of the RRC message. That is, it is proposed to consider the priority of the first field proposed in the disclosure and the data including it as the highest priority, or as a higher priority than MAC control information, or as a priority equivalent to data corresponding to UL-CCCH, or as a higher priority than data corresponding to any other logical channel excluding UL-CCCH.

Although the size of the first field in the disclosure is indicated as 4 bytes in the drawing, it may be defined and used as 1 byte, 2 bytes, 3 bytes, 4 bytes, 5 bytes, 6 bytes, or 8 bytes.

The data protection method proposed in the disclosure may be used by configuring the ciphering procedure or integrity protection procedure of the existing PDCP layer device together with the data protection procedure of the MAC layer device. In this case, the newly introduced data protection procedure of the MAC layer device may be configured independently when configuring the LTM function, and the related data protection (integrity and ciphering) related algorithms and input values, keys, etc. may be defined to be used in the same way as those of the existing PDCP layer, but may also be configured as an independent new value and configured as a value different from the existing value. This is because it is necessary to configure and activate the data protection function exclusively for LTM, and there are many differences from the existing value.

FIG. 1N is a diagram illustrating operations of a sender or a receiver according to an embodiment of the disclosure.

As in 1n-10, the sender (e.g., a UE or a base station) 1n-10 may configure a security configuration procedure based on a radio resource control (RRC) message, system information, or security configuration information or input values recorded in the sender (1n-11). The sender may apply the data protection method proposed in the disclosure (1n-12) and perform transmission to a lower layer device (1n-13).

In addition, as in 1n-20, the receiver (e.g., a UE or a base station) 1n-20 may configure a security configuration procedure based on an RRC message, system information, or security configuration information or input values recorded in the receiver (1n-21), apply the data protection release method proposed in the disclosure (1n-22), and perform delivery to an upper layer device (1n-23).

FIG. 1O is a diagram illustrating a structure of a UE according to an embodiment of the disclosure.

With reference to this diagram, the UE may include a radio frequency (RF) processor 1o-10, a baseband processor 1o-20, a storage 1o-30, and a controller 1o-40.

The RF processor 1o-10 can perform functions for transmitting and receiving signals via radio channels, such as band conversion and amplification of the signals. That is, the RF processor 1o-10 can up-convert a baseband signal, provided from the baseband processor 1o-20, into an RF band signal and then transmit the RF band signal via an antenna, and it can down-convert an RF band signal, received via the antenna, into a baseband signal. For example, the RF processor 1o-10 may include a transmission filter, a reception filter, an amplifier, a mixer, an oscillator, a digital-to-analog convertor (DAC), an analog-to-digital convertor (ADC), or the like. Although only one antenna is illustrated in this diagram, the UE may include a plurality of antennas. Also, the RF processor 1o-10 may include a plurality of RF chains. In addition, the RF processor 1o-10 can perform beamforming. For the beamforming, the RF processor 1o-10 can respectively adjust phases and amplitudes of signals to be transmitted or received via a plurality of antennas or antenna elements. In addition, the RF processor 1o-10 can perform a multi-input multi-output (MIMO) operation and receive a plurality of layers in the MIMO operation. The RF processor 1o-10 can perform reception beam sweeping by appropriately configuring a plurality of antennas or antenna elements under the control of the controller, or adjust the direction and beam width of the reception beam so that the reception beam is coordinated with the transmission beam.

The baseband processor 1o-20 can perform a conversion function between a baseband signal and a bit string in accordance with physical layer specifications of a system. For example, upon data transmission, the baseband processor 1o-20 can generate complex symbols by encoding and modulating a transmission bit string. Upon data reception, the baseband processor 1o-20 can restore a received bit string by demodulating and decoding a baseband signal provided from the RF processor 1o-10. For example, in the case of complying with an orthogonal frequency division multiplexing (OFDM) scheme, upon data transmission, the baseband processor 1o-20 can generate complex symbols by encoding and modulating a transmission bit string, map the complex symbols to subcarriers, and then construct OFDM symbols by performing inverse fast Fourier transform (IFFT) and cyclic prefix (CP) insertion. Upon data reception, the baseband processor 1o-20 can segment a baseband signal provided from the RF processor 1o-10 into OFDM symbol units, restore signals mapped to subcarriers by performing fast Fourier transform (FFT), and then restore a received bit string by demodulating and decoding the signals.

The baseband processor 1o-20 and the RF processor 1o-10 can transmit and receive signals as described above. Thus, the baseband processor 1o-20 and the RF processor 1o-10 may be called a transmitter, a receiver, a transceiver, or a communicator. In addition, at least one of the baseband processor 1o-20 or the RF processor 1o-10 may include a plurality of communication modules to support a plurality of different radio access technologies. Also, at least one of the baseband processor 1o-20 or the RF processor 1o-10 may include different communication modules to process signals of different frequency bands. For example, the different radio access technologies may include LTE network, NR network, etc. Also, the different frequency bands may include a super-high frequency (SHF) (e.g., 2.5 GHz, 5 GHz) band and a millimeter wave (mmWave) (e.g., 60 GHz) band.

The storage 1o-30 can store default programs, application programs, and data, such as configuration information, for operations of the UE. In addition, the storage 1o-30 can provide the stored data upon request by the controller 1o-40.

The controller 1o-40 can control the overall operations of the UE. For example, the controller 1o-40 can transmit and receive signals through the baseband processor 1o-20 and the RF processor 1o-10. In addition, the controller 1o-40 can record and read data on and from the storage 1o-30. To this end, the controller 1o-40 may include at least one processor. For example, the controller 1o-40 may include a communication processor (CP) performing control for communications and an application processor (AP) controlling an upper layer such as an application program.

FIG. 1P is a diagram illustrating a block configuration of a transmission and reception point (TRP) in a wireless communication system according to an embodiment of the disclosure.

As shown in this diagram, the base station may include an RF processor 1p-10, a baseband processor 1p-20, a backhaul communicator 1p-30, a storage 1p-40, and a controller 1p-50.

The RF processor 1p-10 can perform functions for transmitting and receiving signals via radio channels, such as band conversion and amplification of the signals. That is, the RF processor 1p-10 can up-convert a baseband signal, provided from the baseband processor 1p-20, into an RF band signal and then transmit the RF band signal via an antenna, and it can down-convert an RF band signal, received via an antenna, into a baseband signal. For example, the RF processor 1p-10 may include a transmission filter, a reception filter, an amplifier, a mixer, an oscillator, a DAC, an ADC, or the like. Although only one antenna is illustrated in this diagram, the first access node may include a plurality of antennas. Also, the RF processor 1p-10 may include a plurality of RF chains. In addition, the RF processor 1p-10 can perform beamforming. For beamforming, the RF processor 1p-10 can respectively adjust phases and amplitudes of signals to be transmitted or received via a plurality of antennas or antenna elements. The RF processor can perform a downlink MIMO operation by transmitting one or more layers.

The baseband processor 1p-20 can perform a conversion function between a baseband signal and a bit string in accordance with physical layer specifications of a first radio access technology. For example, upon data transmission, the baseband processor 1p-20 can generate complex symbols by encoding and modulating a transmission bit string. Also, upon data reception, the baseband processor 1p-20 can restore a received bit string by demodulating and decoding a baseband signal provided from the RF processor 1p-10. For example, in the case of complying with the OFDM scheme, upon data transmission, the baseband processor 1p-20 can generate complex symbols by encoding and modulating a transmission bit string, map the complex symbols to subcarriers, and then construct OFDM symbols by performing IFFT and CP insertion. Upon data reception, the baseband processor 1p-20 can segment a baseband signal provided from the RF processor 1p-10 into OFDM symbol units, restore signals mapped to subcarriers by performing FFT, and then restore a received bit string by demodulating and decoding the signals. The baseband processor 1p-20 and the RF processor 1p-10 can transmit and receive signals as described above. Thus, the baseband processor 1p-20 and the RF processor 1p-10 may be called a transmitter, a receiver, a transceiver, a communicator, or a wireless communicator.

The communicator 1p-30 can provide an interface for communicating with other nodes in the network.

The storage 1p-40 can store default programs, application programs, and data, such as configuration information, for operations of the main base station. In particular, the storage 1p-40 can store, for example, information about bearers assigned for a connected UE, measurement results reported from the connected UE, and the like. Also, the storage 1p-40 can store criteria information used to determine whether to provide or release multi-connectivity to or from the UE. In addition, the storage 1p-40 can provide the stored data upon request by the controller 1p-50.

The controller 1p-50 can control the overall operations of the main base station. For example, the controller 1p-50 can transmit and receive signals through the baseband processor 1p-20 and the RF processor 1p-10 or through the backhaul communicator 1p-30. Also, the controller 1p-50 can record and read data on and from the storage 1p-40. To this end, the controller 1p-50 may include at least one processor.

The embodiments of the disclsoure disclosed in the description and drawings are merely specific examples presented to easily explain the technical contents of the disclsoure and to help understand the disclsoure, and are not intended to limit the scope of the disclsoure. It will be apparaent to those skilled in the art that other modified examples based on the technical idea of the disclsoure can be implemented in addition to the embodiments disclosed herein.

The methods according to the embodiments described in claims or description of the disclosure may be implemented in the form of hardware, software, or a combination of hardware and software.

In the case of software implementation, a computer-readable storage medium for storing one or more programs (software modules) may be provided. The one or more programs stored in the computer-readable storage medium may be configured for execution by one or more processors in an electronic device. The one or more programs may include instructions that cause the electronic device to perform the methods according to embodiments set forth in claims or description of the disclosure.

Such programs (software modules or software) may be stored in a non-volatile memory including a random access memory or a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, local area network (LAN), wide LAN (WLAN), and storage area network (SAN) or a combination thereof. Such a storage device may access a device performing the embodiments of the disclosure via an external port. Further, a separate storage device on the communication network may access a device performing the embodiments of the disclosure.

In the disclosure, the term "computer program product" or "computer readable medium" is used to collectively refer to media such as a memory, a hard disk installed in a hard disk drive, and a signal. The "computer program product" or "computer readable medium" is a component provided in a method for reporting UE capability in a wireless communication system according to the disclosure.

A machine-readable storage medium may be provided in the form of a non-transitory storage medium. Here, the term "non-transitory storage medium" only means that it is a tangible device and does not include a signal (e.g., electromagnetic waves), and this term does not distinguish between a case where data is stored semi-permanently in the storage medium and a case where it is stored temporarily. For example, the "non-transitory storage medium" may include a buffer in which data is temporarily stored.

According to an embodiment, the method according to various embodiments disclosed herein may be provided as included in a computer program product. The computer program product may be traded between a seller and a buyer as a commodity. The computer program product may be distributed in the form of a machine-readable storage medium (e.g., a compact disc read only memory (CD-ROM)), or may be distributed online (e.g., downloaded or uploaded) via an application store (e.g., PlayStore^{™}) or directly between two user devices (e.g., smartphones). In the case of online distribution, at least a part of the computer program product (e.g., a downloadable app) may be at least temporarily stored or temporarily generated in a machine-readable storage medium, such as a memory of a manufacturer's server, a server of an application store, or an intermediary server.

In the specific embodiments of the disclosure, an element included in the disclosure is expressed in singular or plural form according to the specific embodiment presented. However, the expression of singular or plural form is selected to suit the presented situation for the convenience of description, and the disclosure is not limited by an element expressed in singular or plural form. Therefore, even if any element is expressed in plural form, it may be composed of singular form, or even if any element is expressed in singular form, it may be composed of plural form.

Meanwhile, although specific embodiments have been described in the detailed description of the disclosure, various modifications are possible without departing from the scope of the disclosure. Therefore, the scope of the disclosure should not be limited to the described embodiments, but should be determined not only by the scope of appended claims, but also by equivalents of the scope of the claims.

## Claims

1. A method performed by a transmitting device in a wireless communication system, the method comprising:
generating a media access control (MAC) sub protocol data unit (PDU) to which integrity protection is applied;
generating a first field related to at least one MAC sub PDU to which the integrity protection is applied;
generating a MAC PDU including the at least one MAC sub PDU and the first field; and
transmitting the MAC PDU to a receiving device.

2. The method of claim 1, wherein in case that the MAC sub PDU contains a layer 1/layer 2 triggered mobility (LTM) MAC control element (CE), the first field is located before or after the LTM MAC CE.

3. The method of claim 2, further comprising:
performing a ciphering procedure on either the MAC sub PDU or the LTM AMC CE.

4. The method of claim 1, wherein the first field includes a layer 2 message authentication code - integrity (MAC-I) field, and
the integrity protection is performed based on at least one of a length value, a direction value, message information, a logical channel ID (LCID), a system frame number (SFN), and a beam related configuration value (beam related information).

5. A method performed by a receiving device in a wireless communication system, the method comprising:
receiving, from a transmitting device, a media access control (MAC) protocol data unit (PDU) including at least one MAC sub PDU to which integrity protection is applied and a first field related to the at least one MAC sub PDU to which the integrity protection is applied; and
performing integrity verification of the at least one MAC sub PDU, based on the first field.

6. The method of claim 5, wherein in case that the MAC sub PDU contains a layer 1/layer 2 triggered mobility (LTM) MAC control element (CE), the first field is located before or after the LTM MAC CE.

7. The method of claim 6, further comprising:
performing a deciphering procedure on either the MAC sub PDU or the LTM AMC CE.

8. The method of claim 5, wherein the first field includes a layer 2 message authentication code - integrity (MAC-I) field, and
the integrity protection is performed based on at least one of a length value, a direction value, message information, a logical channel ID (LCID), a system frame number (SFN), and a beam related configuration value (beam related information).

9. A transmitting device in a wireless communication system, the transmitting device comprising:
a transceiver configured to transmit and receive a signal; and
a controller configured to:
generate a media access control (MAC) sub protocol data unit (PDU) to which integrity protection is applied,
generate a first field related to at least one MAC sub PDU to which the integrity protection is applied,
generate a MAC PDU including the at least one MAC sub PDU and the first field, and
transmit the MAC PDU to a receiving device.

10. The transmitting device of claim 9, wherein in case that the MAC sub PDU contains a layer 1/layer 2 triggered mobility (LTM) MAC control element (CE), the first field is located before or after the LTM MAC CE.

11. The transmitting device of claim 10, wherein the controller is configured to perform a ciphering procedure on either the MAC sub PDU or the LTM AMC CE.

12. The transmitting device of claim 9, wherein the first field includes a layer 2 message authentication code - integrity (MAC-I) field, and
the integrity protection is performed based on at least one of a length value, a direction value, message information, a logical channel ID (LCID), a system frame number (SFN), and a beam related configuration value (beam related information).

13. A receiving device in a wireless communication system, the receiving device comprising:
a transceiver configured to transmit and receive a signal; and
a controller configured to:
receive, from a transmitting device, a media access control (MAC) protocol data unit (PDU) including at least one MAC sub PDU to which integrity protection is applied and a first field related to the at least one MAC sub PDU to which the integrity protection is applied, and
perform integrity verification of the at least one MAC sub PDU, based on the first field.

14. The receiving device of claim 13, wherein in case that the MAC sub PDU contains a layer 1/layer 2 triggered mobility (LTM) MAC control element (CE), the first field is located before or after the LTM MAC CE,
the first field includes a layer 2 message authentication code - integrity (MAC-I) field, and
the integrity protection is performed based on at least one of a length value, a direction value, message information, a logical channel ID (LCID), a system frame number (SFN), and a beam related configuration value (beam related information).

15. The receiving device method of claim 14, wherein the controller is configured to perform a ciphering procedure on either the MAC sub PDU or the LTM AMC CE.
